# EUROPÄISCHE PATENTSCHRIFT

(11) **EP 4 486 581 B1**
(45) Veröffentlichungstag und Bekanntmachung des Hinweises auf die Patenterteilung: **08.07.2026**
(21) Anmeldenummer: 23707027.1
(22) Anmeldetag: 20.02.2023
(51) Int. Cl.: B60G 17/052

(54) **VERFAHREN ZUM BETREIBEN EINES PNEUMATIKSYSTEMS**
METHOD FOR OPERATING A PNEUMATIC SYSTEM
PROCÉDÉ POUR FAIRE FONCTIONNER UN SYSTÈME PNEUMATIQUE

(30) Priorität: 01.03.2022 DE 102022104828
(43) Veröffentlichungstag der Anmeldung: 08.01.2025
(73) Patentinhaber: ZF CV Systems Europe BV, 1170 Brüssel (BE)
(72) Erfinder: STABENOW, Uwe, 30880 Laatzen (DE)
(74) Vertreter: Rabe, Dirk-Heinrich
(86) Internationale Anmeldenummer: PCT/EP2023/054166
(87) Internationale Veröffentlichungsnummer: WO 2023/165833

(56) Entgegenhaltungen:
- EP-B1- 2 540 537
- WO-A1-2023/066912
- DE-A1- 10 004 880
- DE-A1- 102016 123 201
- US-A1- 2008 290 617
- US-A1- 2010 320 703

## Beschreibung

Die Erfindung betrifft ein Verfahren gemäß dem Oberbegriff des Anspruchs 1 zum Betreiben eines Pneumatiksystems aufweisend eine Druckluftversorgungsanlage und eine mit der Druckluftversorgungsanlage pneumatisch verbundene Luftfederanlage mit Luftfedern, für ein Fahrzeug.

Die Komponenten einer Druckluftversorgungsanlage stehen so miteinander in Verbindung, dass durch Steuern der Druckluftversorgungsanlage mit einem Steuergerät Luft von einem Verdichter, insbesondere einem Kompressor, aus der Umgebung angesaugt, die angesaugte Luft von einem Lufttrockner getrocknet und die trockene Druckluft über ein Luftverteilermodul in das Druckluftreservoir und/oder in die Luftfedern geleitet werden kann. Ein Drucksensor ist angeordnet und ausgebildet, die Höhe des Druckes in dem Luftverteilermodul zu messen und ein die Höhe des gemessenen Druckes repräsentierendes Drucksensorsignal an das Steuergerät bereitzustellen. Das Steuergerät kann eine Regelung der Druckluftversorgungsanlage auf Basis des gemessenen Druckes anpassen.

Durch Befüllen der Luftfedern kann ein Fahrzeug relativ zu dem Untergrund angehoben werden. Wenn Druckluft aus den Luftfedern in die umgebende Atmosphäre oder in das Druckluftreservoir geleitet wird, kann das Fahrzeug relativ zu dem Untergrund abgesenkt werden.

Es ist oftmals gewünscht, dass ein Fahrzeug relativ schnell angehoben und wieder gesenkt werden kann. Insbesondere bei Geländefahrzeugen und Sport Utility Vehicles (SUV) ist es bei sehr leistungsfähigen Motoren oftmals gewünscht, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiterhin oftmals gewünscht, eine Veränderung der Bodenfreiheit möglichst schnell umzusetzen, was die Anforderungen hinsichtlich Schnelligkeit, Flexibilität und Verlässlichkeit einer Druckluftversorgungsanlage erhöht. Um die vorstehend genannten Anforderungen zu erfüllen, sind typischerweise entsprechend hohe Drücke in der Druckluftversorgungsanlage notwendig. Die Anforderungen an eine elektronisch geregelte Luftfederung (*Electronically Controlled Air Suspension,* kurz ECAS) für ein Fahrzeug umfasst daher regelmäßig hohe Einlass- und Auslassluftströme verbunden mit hohe Drücken in der Druckluftversorgungsanlage.

Hohe Drücke in der Druckluftversorgungsanlage bringen jedoch mit sich, dass es bei einem vergleichsweise schnellen Entlüften der Druckluftversorgungsanlage zu einem hohen Geräuschpegel kommen kann, was auch als Ablassknall bezeichnet wird. Diese Geräusche sind von einem Nutzer eines Fahrzeugs in der Regel nicht gewünscht und werden daher herstellerseitig, z.B. durch Verwenden von Schalldämpfern (engl. *silencers*), reduziert. In Fahrzeugen werden somit regelmäßig zusätzliche Komponenten verbaut, die dazu dienen, einen Geräuschpegel beim Entlüften der Druckluftversorgungsanlage möglichst gering zu halten.

Unter anderem um den Einsatz weiterer Komponenten wie Schalldämpfern in dem Fahrzeug zu reduzieren, wurde vorgeschlagen, einen Geräuschpegel beim Entlüften der Druckluftversorgungsanlage durch eine entsprechende Regelung der Druckluftversorgungsanlage zu reduzieren.

Eine Regelung einer Druckluftversorgungsanlage zum Entlüften aus einem Luftfedersystem ist beispielsweise in WO 2008/147850 A1 beschrieben. Demgemäß soll zur Geräuschreduzierung beim Entlüften eines Gasfederungssystems zunächst die Luftfederventile geöffnet und somit die Luftfedern mit Druckluft beaufschlagt werden. Es soll dann gewartet werden bis sich ein Gleichgewichtsdruck in dem System einstellt, der vergleichsweise geringer ist. Erst wenn sich der Gleichgewichtsdruck in dem System eingestellt hat, wird das Auslassventil geöffnet und das Gasfederungssystem entlüftet. Das Entlüften soll dann bei einem reduzierten Druck erfolgen.

In DE 10 2016 123201 A1 ist beschrieben, dass zum Entlüften eines Kompressors in zumindest zwei Verfahrensschritten komprimierte Luft des Kompressors in zumindest eine Luftfeder einer Luftfederanlage geleitet und nachfolgend in die Umgebung entlüftet wird. Es wird hierzu vorgeschlagen, dass das Entlüften insbesondere bei Anliegen eines Maximaldrucks beginnt. Vorgeblich kann dann beim Entlüften in die Umgebung eine reduzierte Druckdifferenz, beispielsweise ca. 8 bar statt ca. 18 bar, anliegen. Dies soll den Vorteil haben, dass ein Entlüften in die Umgebung mit einem deutlich geringeren Geräusch verursacht durch den reduzierten Ablassschlag möglich ist.

Die DE10004880A1 betrifft ein Luftfedersystem für ein Kraftfahrzeug mit einer Kompressoreinheit, einer Speichereinheit sowie Schaltventilen, über die die einzelnen Luftfedern der einzelnen Fahrzeugräder mit Druckluft versorgt werden, wobei im Bereich zwischen der Kompressoreinheit und den Schaltventilen eine in die Atmosphäre mündende, durch ein Sperrventil absperrbare oder freischaltbare Entlüftungsleitung vorgesehen ist. Vorgesehen sind Maßnahmen, mit Hilfe derer der über die freigeschaltete Entlüftungsleitung in einem gewissen Zeitintervall austretende Luftmassenstrom gegenüber einem unbegrenzten Zustand beschränkbar ist, um eine unerwünschte Geräuschentwicklung beim Entlüften des Systems zu vermeiden. Beispielsweise kann einer separat absperrbaren Haupt- Entlüftungsleitung eine separat absperrbare Hochdruck-Entlüftungsleitung parallel geschaltet sein, deren freier Durchströmquerschnitt geringer ist als derjenige der Haupt-Entlüftungsleitung. Alternativ kann in der Entlüftungsleitung ein Drosselelement vorgesehen sein, mit Hilfe dessen der freie Durchströmquerschnitt der Entlüftungsleitung beschränkbar ist.

Die EP2540537B1 betrifft eine Luftfederungsanlage für ein Nutzfahrzeug.

Die US2010320703A1 offenbart ein intelligentes elektronisches Luftfederungssystem für ein Fahrzeug, das seinen Luftdruck automatisch anpasst, wobei insbesondere die Fahrzeughöhe je nach Beladung angepasst werden kann, wodurch die Sicherheit von Passagieren und Ladung gewährleistet wird.

In der WO 2023/066912 A1 wird ein ähnliches Verfahren zum Betreiben eines Pneumatiksystems beschrieben.

Diese Ansätze sind noch verbesserungsfähig. Insbesondere ist es wünschenswert, beim Entlüften ein vergleichsweise geringes Entlüftungsgeräusch ohne eine übermäßige Beeinträchtigung der Funktionalität des Pneumatiksystems beim Entlüften zu gewährleisten.

Der Erfindung liegt die Aufgabe zugrunde, ein verbessertes oder zumindest alternatives Verfahren zum Betreiben eines Pneumatiksystems bereitzustellen. Der Erfindung liegt insbesondere die Aufgabe zugrunde, ein Verfahren zum Betreiben eines Pneumatiksystems bereitzustellen, das zumindest teilweise die Probleme des Standes der Technik behebt oder mindert.

Vorzugsweise soll mit der Erfindung ein Verfahren zum Betreiben eines Pneumatiksystems bereitgestellt werden, bei dem ein vergleichsweise geringes Entlüftungsgeräusch ohne eine übermäßige Beeinträchtigung der Funktionalität des Pneumatiksystems beim Entlüften gewährleistet ist. Der Erfindung liegt insbesondere die Aufgabe zugrunde, ein Verfahren anzugeben mit dem ein effizientes Druckmanagement beim Betreiben eines Pneumatiksystems zum Entlüften bereitgestellt bzw. ermöglicht ist. Das bevorzugte Druckmanagement sollte sich dabei möglichst nicht oder nur begrenzt oder zumutbar bis kaum auf die Fahreigenschaften eines Fahrzeugs auswirken. Insbesondere ist es eine Aufgabe ein Verfahren anzugeben mittels dem eine Druckluftversorgungsanlage vergleichsweise schnell und bei geringem Geräuschpegel entlüftet werden kann. Gleichwohl soll dabei bevorzugt auf Schalldämpfer oder andere einen Entlüftungsgeräuschpegel reduzierende Komponenten verzichtet werden können.

Diese Aufgabe wird in einem ersten Aspekt durch ein Verfahren des Anspruchs 1 gelöst.

Es wird ein Verfahren zum Betreiben eines Pneumatiksystems umfassend eine Druckluftversorgungsanlage und eine mit der Druckluftversorgungsanlage pneumatisch verbundene Luftfederanlage mit Luftfedern für ein Fahrzeug, insbesondere für einen Personenkraftwagen, vorgeschlagen.

Die Druckluftversorgungsanlage weist eine Pneumatikhauptleitung und einen Lufttrockner in der Pneumatikhauptleitung, auf und die Pneumatikhauptleitung weist einen Verdichteranschluss zu einem Verdichter, und einen Druckluftversorgungsanschluss zu einem Luftverteilermodul der Luftfederanlage auf Die Luftfederanlage des Pneumatiksystems weist eine Anzahl Luftfedern auf, die über eine Gallerie der Luftfederanlage pneumatisch verbunden sind.

Die Luftfederanlage des Pneumatiksystems kann optional das Luftverteilermodul aufweisen. Alternativ könnte das Luftverteilermodul auch Bestandteil der Druckluftversorgungsanlage sein.

Der Verdichter der Druckluftversorgungsanlage kann beispielsweise als Kompressor ausgeführt sein.

Das Pneumatiksystem weist ein Steuergerät zum Steuern der Druckluftversorgungsanlage und der Luftfederanlage auf.

In dem Verfahren wird die Druckluftversorgungsanlage vor einem Entlüften der Druckluftversorgungsanlage, insbesondere in die Umgebung der Druckluftversorgungsanlage oder in die Atmosphäre, von dem Steuergerät so angesteuert, dass Druckluft aus dem Lufttrockner und/oder dem Luftverteilermodul bei einem geschlossenen Auslassventil und bei ausgeschaltetem Verdichter in eine erste Luftfeder abgeführt wird.

Erfindungsgemäß ist in dem Verfahren vorgesehen, dass als die erste Luftfeder diejenige Luftfeder ermittelt wird, die vor dem Abführen von Druckluft aus Lufttrockner und/oder dem Luftverteilermodul die größte Druckdifferenz zu dem Druck in dem Luftverteilermodul aufweist. Dies ist insbesondere die Luftfeder mit dem niedrigsten Luftfederdruck bzw. Balgdruck in der Luftfeder.

Erfindungsgemäß wird in dem Verfahren, wenn die erste Luftfeder ermittelt wurde, Druckluft aus dem Lufttrockner und/oder dem Luftverteilermodul zunächst in die als erste Luftfeder ermittelte Luftfeder abgeführt.

Erfindungsgemäß ist in dem Verfahren weiterhin vorgesehen, dass sich zeitlich an das Abführen von Druckluft in die erste Luftfeder anschließend in dem Lufttrockner und/oder dem Luftverteilermodul verbliebene Druckluft in eine zweite Luftfeder der Luftfederanlage und/oder ein Zwischenvolumen abgeführt wird.

Es wird damit insbesondere zur Druckreduzierung in dem Lufttrockner und/oder dem Luftverteilermodul zeitlich an das Abführen von Druckluft in die erste Luftfeder anschließend in dem Lufttrockner und/oder dem Luftverteilermodul verbliebene Druckluft in eine zweite Luftfeder der Luftfederanlage abgeführt.

Das erfindungsgemäße Verfahren bezieht sich auf eine Betriebssituation, in der ein Entlüften der Druckluftversorgungsanlage unmittelbar bevorsteht. Entsprechend wurde die Druckluftversorgungsanlage bereits befüllt und der Befüllvorgang ist abgeschlossen. Es gibt also eine weitgehend konstante Menge an Druckluft in der Druckluftversorgungsanlage.

Durch Entlüften der Druckluftversorgungsanlage in die Umgebung bzw. Atmosphäre soll die in der Druckluftversorgungsanlage vorhandene Druckluftmenge reduziert werden. In einer Betriebssituation vor dem Entlüften der Druckluftversorgungsanlage in die Umgebung bzw. Atmosphäre ist vorzugsweise der Verdichter ausgeschaltet, ein Speicherventil eines Druckluftreservoirs geschlossen und/oder, falls vorhanden, ein Einlassventil geschlossen.

Die Erfindung beruht auf der Überlegung, dass es grundsätzlich vorteilhaft ist, wenn auf Schalldämpfer zum Reduzieren des Geräuschpegels beim Entlüften einer Druckluftversorgungsanlage vollständig oder wenigstens weitestgehend verzichtet werden kann. Zumindest ist es vorteilhaft, wenn trotz der hohen Anforderung an Druckluftversorgungsanlage, z.B. hinsichtlich der Möglichkeit eines schnellen Anhebens und Absenkens des Fahrzeugs, was in der Regel nur mit hohen Drücken in der Druckluftversorgungsanlage erreicht werden kann, auf zusätzliche Schalldämpfer verzichtet werden kann.

Die Reduzierung des Geräuschpegels beim Entlüften erfolgt dann im Wesentlichen durch eine entsprechende Regelung der Druckluftversorgungsanlage. Ein vollständiger oder wenigstens weitergehender Verzicht auf Schalldämpfer hätte zudem den Vorteil einer erheblichen Kosteneinsparung.

Eine solche Regelung, durch die auf Schalldämpfer vollständig oder zumindest weitestgehend verzichtet werden kann, wird durch das erfindungsgemäße Verfahren bereitgestellt.

Dies wird durch das erfindungsgemäße Verfahren dadurch erreicht, dass Druckluft in diejenige der Luftfedern abgeführt wird, deren Druck im Vergleich zu den Drücken in den übrigen Luftfedern die größte Druckdifferenz zu dem Druck in dem Lufttrockner und/oder in dem Luftverteilermodul aufweist. Dadurch ist es möglich den Druck in dem Lufttrockner und/oder in dem Luftverteilermodul vor dem Entlüften deutlich zu senken. Insbesondere kann der Druck am Auslass soweit gesenkt werden, dass auf Schalldämpfer vollständig oder zumindest weitestgehend verzichtet werden kann.

Bei der nach dem erfindungsgemäßen Verfahren betriebenen Druckluftversorgungsanlage kann es sich um ein offenes System oder ein geschlossenes System handeln.

Ein offenes System zeichnet sich dadurch aus, dass Luft durch den Verdichter aus der umgebenen Atmosphäre angesaugt und in Luftfedern des Fahrzeugs gefördert wird, z.B. um das Fahrzeug anzuheben. Bei einem offenen System saugt der Verdichter Luft insbesondere nur aus der Umgebung an bzw. lässt Luft in die Umgebung ab. Allerdings kann auch bei einem offenen System ein Druckluftreservoir vorgesehen sein, zwischen dem Druckluft mit einer oder mehreren Luftfedern und/oder dem Verdichter zur Druckregulierung in der Druckluftversorgungsanlage ausgetauscht werden kann.

Bei einem geschlossenen System wird Luft zwischen einem Druckluftreservoir und den Luftfedern hin und her gefördert, um das Fahrzeug anzuheben oder abzusenken. Es kann erforderlich sein, dass auch in einem geschlossenen System Luft von außen nachgefüllt wird. Auch eine Druckluftversorgungsanlage, die ein geschlossenes System ist oder als ein geschlossenes System betrieben wird, weist daher regelmäßig einen Einlass mit einem Einlassventil auf.

Sowohl bei einem offenen System als auch bei einem geschlossenen System strömt Luft beim Befüllen der Druckluftversorgungsanlage unter Druck durch ein Lufttrockner.

Die Gallerie der Luftfederanlage kann auch als Bestandteil des Luftverteilermoduls ausgebildet sein.

Ein Befüllen der Luftfedern mit Druckluft meint insbesondere, dass die Bälge der Luftfedern mit Druckluft beaufschlagt werden.

Vorzugsweise wird überschüssige Druckluft aus dem Lufttrockner und/oder dem Luftverteilermodul auf die Luftfedern verteilt. Das Verteilen der Druckluft geschieht, indem die Luftfedern zeitlich nacheinander mit Druckluft beaufschlagt werden.

Dadurch, dass zunächst diejenige der Luftfedern mit Druckluft beaufschlagt wird, die die größte Druckdifferenz zu dem Druck in dem Luftverteilermodul, kann der Druck in dem Lufttrockner und/oder dem Luftverteilermodul bereits mit dem Beaufschlagen der ersten Luftfeder mit Druckluft deutlich gesenkt werden. Die verbleibende Druckluft wird dann auf die übrigen Luftfedern aufgeteilt. Vorzugsweise wird dabei die Reihenfolge der übrigen Luftfedern so gewählt, dass jeweils diejenige der Luftfedern, die dem jeweiligen Zeitpunkt die größte Druckdifferenz zu dem Druck in dem Luftverteilermodul aufweist, mit Druckluft beaufschlagt wird.

Diese Vorgehensweise kann solange wiederholt werden, bis die überschüssige Druckluft aus dem Lufttrockner und/oder dem Luftverteilermodul auf die Luftfedern verteilt ist. Das Entlüften der Druckluftversorgungsanlage und insbesondere des Lufttrockners und/oder des Luftverteilermoduls kann dann bei einem vergleichsweise geringeren Druck geschehen, so dass der Geräuschpegel vergleichsweise geringer ist, sogar, wenn auf Schalldämpfer vollständig oder zumindest weitestgehend verzichtet wurde.

Der Ausdruck "zeitlich nacheinander" oder "sich zeitlich anschließend" meint, dass die Luftfedern unmittelbar nacheinander einzeln oder unmittelbar nacheinander in wenigstens zwei Gruppen von mindestens zwei Luftfedern, d.h. ohne weitere Zwischenschritte, wie z.B. ein weiteres Entlüften oder Befüllen, mit Druckluft aus dem Lufttrockner und/oder dem Luftverteilermodul beaufschlagt werden. Dabei wird beispielsweise das Luftfederventil einer ersten Luftfeder geöffnet, um diese mit Druckluft aus dem Lufttrockner und/oder dem Luftverteilermodul zu beaufschlagen. Anschließend wird das Luftfederventil dieser Luftfeder wieder geschlossen. Wenn das Luftfederventil dieser Luftfeder geschlossen ist wird das Luftfederventil der nächsten Luftfeder geöffnet, um diese mit Druckluft zu beaufschlagen. Die Vorgehensweise wird nacheinander für jede der Luftfedern angewendet, um die zeitlich nacheinander einzeln mit Druckluft aus dem Lufttrockner und/oder dem Luftverteilermodul zu beaufschlagen. Wenn also in dem Verfahrensschritt Luftfedern zeitlich nacheinander einzeln mit Druckluft aus dem Lufttrockner und/oder dem Luftverteilermodul beaufschlagt werden, wird immer nur eine der Luftfedern mit Druckluft beaufschlagt und die Luftfederventile der übrigen Luftfedern sind während dieser Zeit geschlossen.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Bevorzugt wird in dem Verfahren nach dem Beaufschlagen der ersten und zweiten Luftfeder mit Druckluft, die restliche Druckluft aus dem Lufttrockner und/oder dem Luftverteilermodul durch den Auslass bei geschlossenen Luftfederventilen in die umgebende Atmosphäre entlüftet. Da durch das Beaufschlagen wenigstens einer der Luftfedern mit Druckluft der Druck am Auslass reduziert werden kann, ist es möglich, dass ein Entlüften bei geschlossenen Luftfederventilen in die umgebende Atmosphäre bei einem deutlich reduzierten Geräuschpegel erfolgt. Insbesondere kann der Druck soweit gesenkt werden, dass auf Schalldämpfer vollständig oder zumindest weitestgehend verzichtet werden kann.

In dem Verfahren ist es weiterhin bevorzugt, dass zeitlich vor einem Abführen von Druckluft aus dem Lufttrockner und/oder dem Luftverteilermodul durch den Auslass in die umgebende Atmosphäre, Druckluft aus dem Lufttrockner und/oder dem Luftverteilermodul in das Zwischenvolumen abgeführt wird. Das Befüllen des Zwischenvolumens findet insbesondere direkt vor dem Entlüften des Lufttrockners und/oder des Luftverteilermoduls statt. Das heißt, auf den Verfahrensschritt des Befüllens des Zwischenvolumens folgt unmittelbar der Verfahrensschritt des Entlüftens des Lufttrockners und/oder des Luftverteilermoduls. Dadurch kann der Druck in dem Lufttrockner und/oder dem Luftverteilermodul noch weiter gesenkt werden und insbesondere unterhalb des Druckniveaus in den Luftfedern.

Vorzugsweise werden die erste und zweite Luftfeder mit Druckluft aus dem Lufttrockner und/oder dem Luftverteilermodul beaufschlagt, falls mit dem Drucksensor eine Höhe des Druckes in dem Luftverteilermodul gemessen wird, die kleiner ist als 12 bar, insbesondere kleiner ist als 11 bar, bevorzugt kleiner ist als 10 bar, besonders bevorzugt zwischen 0 bar und 12 bar beträgt. Entsprechend ermöglicht das erfindungsgemäße Verfahren insbesondere ein Entlüften bei geringen oder mittleren Drücken bei einem zusätzlich reduzierten Geräuschpegel. Dies ermöglicht es auf Schalldämpfer vollständig oder wenigstens teilweise zu verzichten.

In dem Verfahren kann optional vorgesehen sein, dass die Druckluftversorgungsanlage von dem Steuergerät so angesteuert wird, dass die Druckluft in einer vorgegebenen Druckluftmenge und/oder für eine vorgegebene Zeitdauer und/oder um einen vordefinierten Druckabfall in dem Luftverteilermodul in diejenige der Luftfedern mit der größten Druckdifferenz zu dem Druck in dem Lufttrockner und/oder in dem Luftverteilermodul abgeführt wird. Die Luftfeder wird also lediglich mit einer bestimmten Druckluftmenge befüllt, die insbesondere so bemessen ist, dass sich die Fahreigenschaften eines Fahrzeugs durch das Befüllen der Luftfeder nicht oder wenigstens kaum ändern.

Die vorgegebene Druckluftmenge kann beispielweise aus dem gemessenen Drücken des Drucksensors und dem bekannten Lufttrockner- und Luftverteilermodulvolumen sowie den Luftfedervolumen errechnet werden.

Die Druckluftmenge und/oder die Zeitdauer kann beispielweise so gewählt sein, dass das Fahrzeug durch Befüllen der Luftfeder lediglich um einen vergleichsweise kleinen Betrag angehoben wird, z.B. um einen Zentimeter oder weniger.

Ein Abführen von Druckluft aus dem Lufttrockner gemäß einen vordefinierten Druckabfall in dem Luftverteilermodul kann beispielweise so umgesetzt werden, dass ein bestimmter Druckabfall im Luftverteilermodul jeweils in eine Luftfeder abgeführt wird. Beispielsweise kann im Luftverteilermodul der Druck mit dem Drucksensor gemessen werden und jeweils für die Zeitdauer eines vordefinierten Druckabfalls eine der Luftfedern mit Druckluft gefüllt werden. Beispielweise kann jede der Luftfedern über einen Druckabfall von 1 bar in dem Luftverteilermodul mit Druckluft aus dem Druckvolumen befüllt werden.

Eine vordefinierte Zeitdauer, über die eine Luftfeder mit Druckluft befüllt wird kann beispielsweise zwischen 50 ms und 400 ms betragen, z.B. 100 ms.

In dem Verfahren kann insbesondere vorgesehene sein, dass nach dem Befüllen derjenigen Luftfeder mit Druckluft, die im Vergleich zu den Drücken in den übrigen Luftfedern die größte Druckdifferenz zu dem Druck in dem Lufttrockner und/oder in dem Luftverteilermodul aufweist:
- Druckluft aus dem Lufttrockner und/oder dem Luftverteilermodul anschließend in diejenige der übrigen Luftfedern abgeführt wird, deren Druck im Vergleich zu den Drücken der beiden verbleibenden Luftfedern den größten Unterschied zu dem Druck in dem Lufttrockner und/oder in dem Luftverteilermoduls aufweist, und
- Druckluft aus dem Lufttrockner und/oder dem Luftverteilermodul anschießend in diejenige der beiden verbleibenden Luftfedern abgeführt wird, deren Druck im Vergleich zu dem Druck der anderen verbleibenden Luftfeder den größten Unterschied zu dem Druck in dem Lufttrockner und/oder in dem Luftverteilermodul aufweist, und
- Druckluft aus dem Lufttrockner und/oder dem Luftverteilermodul zuletzt in diejenige verbleibende Luftfeder abgeführt wird, die noch nicht mit Druckluft beaufschlagt wurde.

Es werden also nacheinander die Luftfedern mit Druckluft befüllt, wobei von den Luftfedern immer gerade diejenige Luftfeder befüllt wird, deren Druck den größten Unterschied zu dem Druck in dem Lufttrockner und/oder in dem Luftverteilermodul aufweist.

Vorzugsweise werden in dem Verfahren gemäß der anhand der größten Druckdifferenz zu dem Druck in dem Lufttrockner und/oder in dem Luftverteilermodul ermittelten Reihenfolge der Luftfedern, die Luftfedern in derselben Reihenfolge erneut zeitlich nacheinander mit einer vorgegebenen Druckluftmenge und/oder jeweils für eine vordefinierte Zeitdauer mit Druckluft aus dem Lufttrockner und/oder dem Luftverteilermodul beaufschlagt werden. Vorzugsweise werden die Luftfedern solange nacheinander mit Druckluft beaufschlagt, bis der Druck am Auslass einen Betrag hat du insbesondere unterhalb eines vorgegebenen Grenzwertes liegt.

Beispielsweise kann in dem Verfahren für jede der Luftfedern eine Druckluftmenge und/oder Zeitdauer individuell vorgegeben und die Druckluftversorgungsanlage von dem Steuergerät so angesteuert wird, dass Druckluft in der jeweils vorgegebenen Druckluftmenge und/oder für die vorgegebene Zeitdauer in die entsprechende der Luftfedern abgeführt wird. Die Luftfedern können also mit jeweils unterschiedlichen Druckluftmengen und/oder für unterschiedliche Zeitdauern mit Druckluft beaufschlagt werden. Druckluftmenge und/oder Zeitdauer können für jeder der Luftfedern z.B. in Abhängigkeit von dem in der jeweiligen Luftfeder vorherrschenden Druck gewählt werden.

Alternativ zu dem Befüllen von immer nur einer der Luftfedern kann in dem Verfahren vorgesehen sein, dass die beiden Luftfedern einer Vorderachse oder einer Hinterachse des Fahrzeugs gleichzeitig mit Druckluft beaufschlagt werden. Eine solche Vorgehensweise kann beispielweise dann vorteilhaft sein, wenn die Luftfedern einer Vorderachse oder einer Hinterachse im Wesentlichen dieselben Drücke aufweisen.

Vorzugsweise befindet sich die erste Luftfeder an einer anderen Fahrzeugachse als die zweite Luftfeder befindet und die erste Luftfeder und die zweite Luftfeder werden jeweils zusammen mit weiteren Luftfedern derselben Fahrzeugachse mit Druckluft beaufschlagt.

Wenn die Luftfedern einer Vorderachse oder einer Hinterachse gleichzeitig mit Druckluft befüllt werden kann es vorteilhaft sein, wenn
- falls der Druck einer Vorderachse des Fahrzeugs größer als der Druck der Luftfedern einer Hinterachse des Fahrzeugs ist,
- vor dem Entlüften Druckluft von den Luftfedern der Vorderachse in die Luftfedern der Hinterachse abgeführt wird.

Alternativ kann vorgesehen sein, dass
- falls der Druck der Luftfedern einer des Fahrzeugs größer als der Druck der Luftfedern einer Vorderachse des Fahrzeugs ist,
- vor dem Entlüften Druckluft von den Luftfedern der Hinterachse in die Luftfedern der Vorderachse abgeführt wird.

In dem Verfahren kann weiterhin optional vorgesehen sein, dass die Druckluftversorgungsanlage von dem Steuergerät so angesteuert wird, dass das Auslassventil in vordefinierten Zeitabständen geöffnet und wieder geschlossen wird, so dass die Druckluftversorgungsanlage schrittweise durch den Auslass entlüftet wird. Dadurch kann die Druckluft in kleinen Druckluftmengeneinheiten portionsweise an die umgebende Atmosphäre abgegeben werden, wodurch ein Geräuschpegel beim Entlüften weiter reduziert werden kann.

Alternativ oder zusätzlich kann in dem Verfahren weiterhin vorgesehen sein, dass die Druckluftversorgungsanlage von dem Steuergerät so angesteuert wird, dass der Verdichter während eines Entlüftens von Druckluft durch den Auslass einen Teil der Druckluft speichert, so dass die tatsächlich an die umgebende Atmosphäre abgegebene Druckluftmenge vergleichsweise geringer ist. Dadurch, dass an die umgebende Atmosphäre wird dann eine vergleichsweise geringere Druckluftmenge abgegeben wird, kann zusätzlich ein Geräuschpegel beim Entlüften weiter reduziert werden.

Die Druckluftversorgungsanlage kann weiterhin einen Zusatzspeicher umfassen, und in dem Verfahren zusätzlich zu den Luftfedern und vor dem Entlüften der Druckluftversorgungsanlage der Zusatzspeicher mit einer vorgegebenen Druckluftmenge und/oder für eine vordefinierte Zeitdauer mit Druckluft aus dem Lufttrockner und/oder dem Luftverteilermodul beaufschlagt werden. Auch auf diese Weise kann eine an die umgebende Atmosphäre abgegebene Druckluftmenge weiter reduziert werden.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1A:: schematisch eine mit einer Luftfederanlage pneumatisch verbundene Druckluftversorgungsanlage, bei der Einlass und Auslass voneinander getrennt realisiert sind;
- Fig. 1B:: schematisch eine mit einer Luftfederanlage pneumatisch verbundene Druckluftversorgungsanlage, bei der Einlass und Auslass mittels eines gemeinsamen Anschlusses realisiert sind;
- Fig. 2:: schematisch ein Ablaufdiagramm für ein Verfahren zum Betreiben einer Druckluftversorgungsanlage;
- Fig. 3:: ein Diagramm, in dem für unterschiedliche Drosseldurchmesser des Lufttrockners die an die umgebende Atmosphäre abgegebene Druckluftmenge über dem Druck am Auslass angegeben wird;
- Fig. 4:: schematisch ein Ablaufdiagramm für ein Verfahren zum Betreiben einer Druckluftversorgungsanlage, in dem vor dem Entlüften diejenige der Luftfedern mit Druckluft befüllt wird, die im Vergleich zu den Drücken in den übrigen Luftfedern die größte Druckdifferenz zu dem Druck in dem Lufttrockner und/oder in dem Luftverteilermodul aufweist;
- Fig. 5A:: schematisch eine mit einer Luftfederanlage pneumatisch verbundene Druckluftversorgungsanlage, die als offenes System realisiert ist;
- Fig. 5B:: schematisch die in Fig. 5A dargestellte Druckluftversorgungsanlage, in der die Umleitung von Druckluft in diejenige der Luftfedern mit Druckluft befüllt wird, die im Vergleich zu den Drücken in den übrigen Luftfedern die größte Druckdifferenz zu dem Druck in dem Lufttrockner und/oder in dem Luftverteilermodul aufweist, eingezeichnet ist;
- Fig. 5C:: schematisch die in Fig. 5A dargestellte Druckluftversorgungsanlage, in der die Umleitung von Druckluft in die beiden Luftfedern der Hinterachse eines Fahrzeugs eingezeichnet ist;
- Fig. 5D:: schematisch die in Fig. 5A bis Fig. 5C dargestellte Druckluftversorgungsanlage, in der ein Entlüften der Druckluftversorgungsanlage in die umgebende Atmosphäre eingezeichnet ist;
- Fig. 5E:: schematisch die in Fig. 5A bis Fig. 5D dargestellte Druckluftversorgungsanlage, in der ein Entlüften in die umgebende Atmosphäre eingezeichnet ist, wobei während des Entlüftens ein Teil der Druckluft in dem Verdichter gespeichert wird;
- Fig. 6A:: eine durch Schaltsymbole dargestellte Druckluftversorgungsanlage, die über Luftfederventile mit Luftfedern einer Luftfederanlage pneumatisch verbunden ist;
- Fig. 6B:: die in Fig. 6A dargestellte Druckluftversorgungsanlage, wobei das Luftfederventil einer ersten Luftfeder geöffnet ist, um Druckluft in die erste Luftfeder umzuleiten;
- Fig. 6C:: die in Fig. 6A dargestellte Druckluftversorgungsanlage, wobei das Luftfederventil einer zweiten Luftfeder geöffnet ist, um Druckluft in die zweite Luftfeder umzuleiten;
- Fig. 6D:: die in Fig. 6A dargestellte Druckluftversorgungsanlage, wobei das Luftfederventil einer dritten Luftfeder geöffnet ist, um Druckluft in die dritte Luftfeder umzuleiten;
- Fig. 6E:: die in Fig. 6A bis Fig. 6D dargestellte Druckluftversorgungsanlage, wobei alle Luftfederventile geschlossen und das Relaisventil und das Auslassventil zum Entlüften Druckluftversorgungsanlage geöffnet sind;
- Fig. 7:: ein Logikschaltbild, das eine Abfolge beim Befüllen der Luftfedern mit Druckluft repräsentiert;
- Fig. 8:: schematisch eine mit einer Luftfederanlage pneumatisch verbundene Druckluftversorgungsanlage, die als geschlossenes System realisiert ist und einen Zusatzspeicher aufweist.

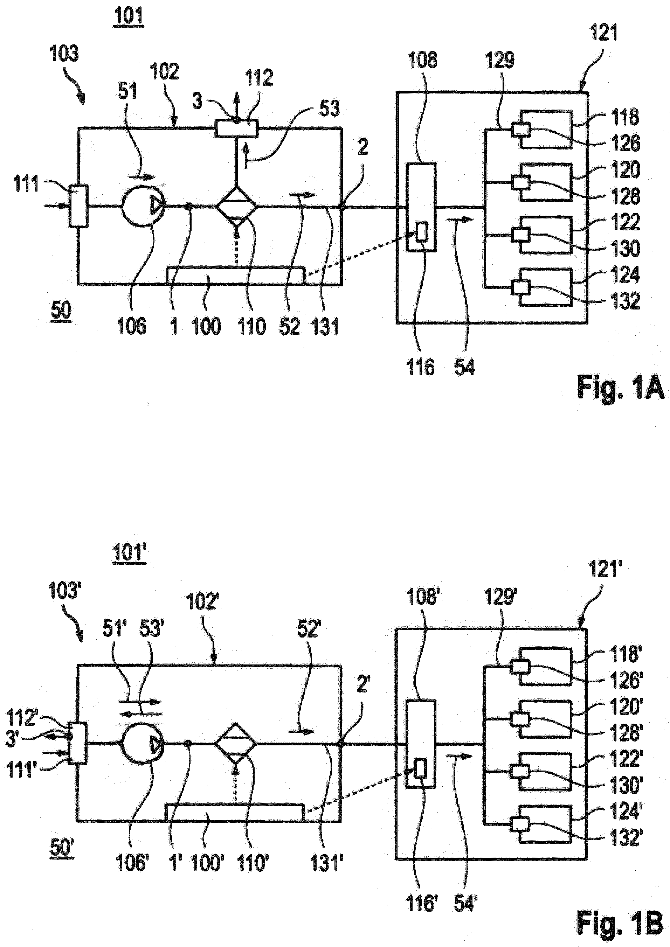

Fig. 1A zeigt schematisch eine mit einer Luftfederanlage 121 pneumatisch verbundene Druckluftversorgungsanlage 102, bei ein Verdichteranschluss 1 und ein Auslass 3 voneinander getrennt realisiert sind.

Die Druckluftversorgung 102 und die Luftfederanlage 121 sind Komponenten eines Fahrzeugs 101 und können beispielsweise dazu verwendet werden das Fahrzeug 101 relativ zum Untergrund anzuheben oder abzusenken. Druckluftversorgungsanlage 102 und Luftfederanlage 121 bilden zusammen ein Pneumatiksystem 103.

Die Druckluftversorgungsanlage 102 umfasst den Verdichteranschluss 1 mit einem Einlassventil 111 und einen Auslass 3 mit einem Auslassventil 112. Zwischen Verdichteranschluss 1 und Druckluftversorgungsanschluss 2 erstreckt sich eine Pneumatikhauptleitung 131. Die Druckluftversorgungsanlage 102 umfasst weiterhin ein pneumatisch mit dem Verdichteranschluss 1 verbundenen Verdichter, der 106 dazu dient, Luft 51 aus der umgebenden Atmosphäre 50 anzusaugen und zu komprimieren und die komprimierte Luft als Druckluft 52 an ein Lufttrockner 110 weiterzuleiten. In diesem Ausführungsbeispiel ist der Verdichter 106 als Kompressor ausgeführt. Das Lufttrockner 110, ist ausgebildet, aus der umgebenden Atmosphäre 50 angesaugte Luft 51 zu trocknen und an ein Luftverteilermodul 108 weiterzuleiten. Das Lufttrockner 110 ist auch pneumatisch mit dem Auslass 3 verbunden, durch den die Druckluftversorgungsanlage 102 entlüftet werden kann.

Das Luftverteilermodul 108 ist Bestandteil der Luftfederanlage 121 und kann auch die Gallerie 129 umfassen. Das Luftverteilermodul 108 umfasst einen Drucksensor 116 zum Erfassen einer Höhe des Druckes in dem Luftverteilermodul 108. Das Luftverteilermodul 108 dient dazu, Druckluft 54 an die Gallerie 129 weiterzuleiten.

Die Druckluftversorgungsanlage 102 umfasst weiterhin eine Steuergerät 100 zum Steuern der Druckluftversorgungsanlage 102. Die Steuergerät 100 ist über eine Datenverbindung 55 mit dem Drucksensor 116 verbunden. Über die Datenverbindung 55 kann ein Drucksensorsignal, das die Höhe eines erfassten Druckes repräsentiert, an die Steuergerät 100 übertragen werden. Die Steuergerät 100 ist weiterhin über eine Steuerleitung 56 mit dem Verdichter 106 verbunden, um den Verdichter 106 zu steuern. Beispielsweise kann die Steuergerät 100 den Verdichter 106 auf Basis einer von dem Drucksensor 116 erfassten Höhe des Druckes steuern, die über die Datenverbindung 55 mittels eines Drucksensorsignals von dem Drucksensor 116 an die Steuergerät 100 übertragen worden ist.

Die Luftfederanlage 121 umfasst vier Luftfedern 118, 120, 122, 124, die über die Gallerie 129 mit Druckluft 54 befüllt werden können um das Fahrzeug 101 anzuheben. Wenn Druckluft 54 aus den Luftfedern 118, 120, 122, 124 in die Druckluftversorgungsanlage 102 abgeführt wird, wird das Fahrzeug 101 relativ zum Untergrund abgesenkt.

Die Luftfedern 118, 120, 122, 124 sind jeweils über die Luftfederventile 126, 128, 130, 132 über die Gallerie 129 mit dem Luftverteilermodul 108 pneumatisch verbunden. Bei geöffneten Luftfederventilen 126, 128, 130, 132 können die Luftfedern 118, 120, 122, 124 entsprechend mit Druckluft 54 befüllt oder entleert werden.

Fig. 1B zeigt schematisch eine mit einer Luftfederanlage 121' pneumatisch verbundene Druckluftversorgungsanlage 102', bei der für den Auslass 3' keine separate Pneumatikleitung vorgesehen ist. Druckluftversorgungsanlage 102' und Luftfederanlage 121' bilden zusammen ein Pneumatiksystem 103'.

Die in Bezug auf Fig. 1A beschriebene Druckluftversorgungsanlage 102 unterscheidet sich insbesondere dadurch von der Druckluftversorgungsanlage 102', dass bei der Druckluftversorgungsanlage 102 Verdichteranschluss 1 und Auslass 3 getrennt voneinander realisiert sind.

Entsprechend ist das Lufttrockner 110' der Druckluftversorgungsanlage 102' pneumatische mit dem Verdichter 106' und dem Luftverteilermodul 108' verbunden. Der Verdichter 106' ist wiederum pneumatisch mit dem Verdichteranschluss 1' und dem Auslass 3' über eine Pneumatikleitung verbunden. Von dem Verdichter 106' aus der umgebenden Atmosphäre 50' angesaugte Luft 51' wird entsprechend von dem Verdichteranschluss 1' zu dem Lufttrockner 106'geleitet und von diesem getrocknet. Die komprimierte Luft wird als Druckluft 52' an das Luftverteilermodul 108' weitergeleitet. Über den Druckluftversorgungsanschluss 2' kann die Druckluft 54' von dem Luftverteilermodul 108' an die pneumatisch mit der Druckversorgungsanlage 102' verbundene Luftfederanlage 121' weitergeleitet werden.

Die Luftfederanlage 121' umfasst die Luftfedern 118', 120', 122', 124', die durch Öffnen der jeweiligen Luftfederventile 126', 128', 130', 132' mit Druckluft 52' beaufschlagt werden können, um so das Fahrzeug c anzuheben.

Die Druckluftversorgungsanlage 102' umfasst eine Steuergerät 100', die über eine Datenverbindung 55' mit einem Drucksensor 116' des Luftverteilermoduls 108' verbunden ist. Der Drucksensor 116' ist ausgebildet, eine Höhe des Druckes in dem Luftverteilermodul 108' zu messen und ein Drucksensorsignal, welches die erfasste Höhe des Druckes in dem Luftverteilermodul 108' repräsentiert, über die Datenverbindung 55' an die Steuergerät 100' zu übertragen. Über eine Steuerleitung 56' ist die Steuergerät 100' mit dem Verdichter 106' zum Steuern des Verdichters 110' verbunden. Die Steuerung des Verdichter 106' durch die Steuergerät 100' kann auf Basis der von dem Drucksensor 116' gemessenen Höhe des Druckes in dem Luftverteilermodul 108' durchgeführt werden.

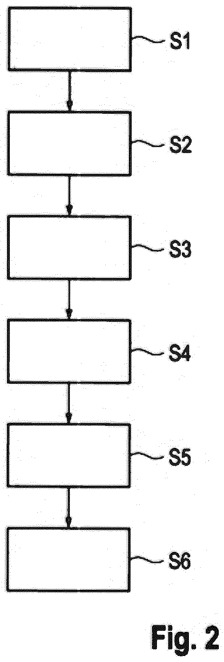

Fig. 2 zeigt schematisch ein Ablaufdiagramm für ein an sich bekanntes Verfahren zum Betreiben einer Druckluftversorgungsanlage. Mit dem Verfahren kann insbesondere der Druck am Auslass der Druckluftversorgungsanlage reduziert werden, so dass ein Entlüften der Druckluftversorgungsanlage bei einem vergleichsweise geringeren Druck erfolgen kann. Aufgrund des Entlüftens bei einem vergleichsweise geringeren Druck, ist auch der Geräuschpegel, der beim Entlüften der Druckluftversorgungsanlage entsteht, vergleichsweise geringer.

In dem Verfahren wird zunächst ein Verdichter der Druckluftversorgungsanlage in den Leerlauf gebracht (Schritt S1) und das Auslassventil eines Auslasses der Druckluftversorgungsanlage geschlossen (Schritt S2). Wenn sich der Verdichter im Leerlauf befindet und das Auslassventil geschlossen ist, werden die Luftfederventile geöffnet (Schritt S3). Durch öffnen der Luftfederventile strömt Druckluft aus der Druckluftversorgungsanlage in die Luftfedern einer pneumatische mit der Druckluftversorgungsanlage verbundenen Luftfederanlage. Es stellt sich dann ein Gleichgewichtsdruck in der Druckluftversorgungsanlage ein, der vergleichsweise geringer ist als der Druck, der vor dem Öffnen der Luftfederventile in der Druckluftversorgungsanlage vorgeherrscht hat (Schritt S4). Nachdem sich ein Gleichgewichtsdruck in der Druckluftversorgungsanlage und der Luftfederanlage eingestellt hat, werden die Luftfederventile wieder geschlossen (Schritt S5). Die Luftfederventile werden in dem Verfahren alle gemeinsam geöffnet und geschlossen. Dadurch wird das Fahrzeug durch Beaufschlagen der Luftfedern mit Druckluft in einem Schritt angehoben, was sich negativ auf die Fahreigenschaften des Fahrzeugs auswirken kann.

Nachdem die Luftfederventile wieder geschlossen wurden, wird das Auslassventil geöffnet (Schritt S6), um die Druckluftversorgungsanlage bei einem vergleichsweise geringeren Druck am Auslass zu entlüften.

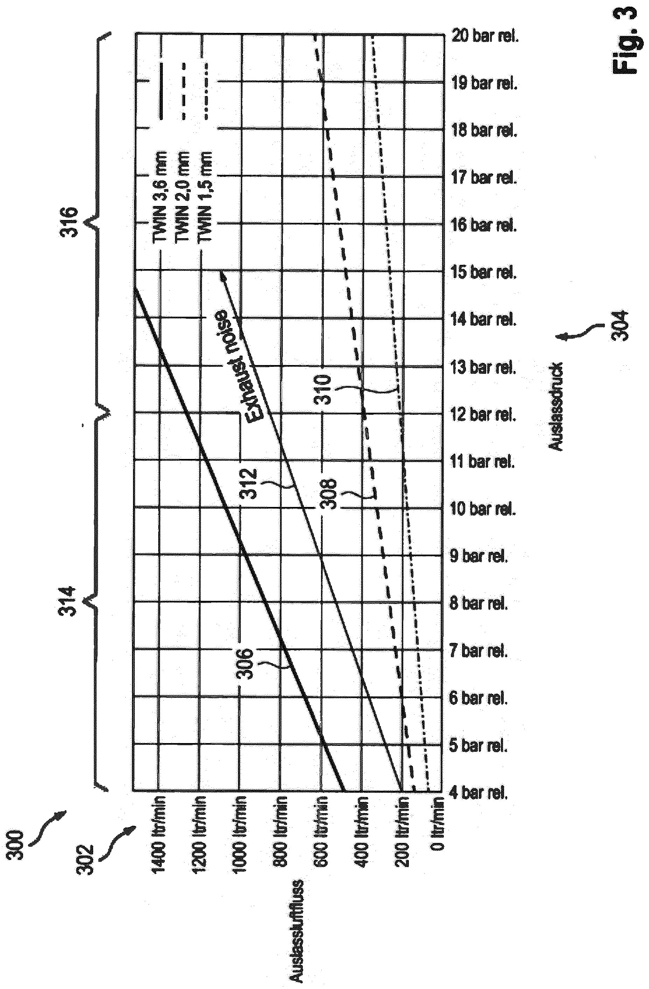

Fig. 3 zeigt ein Diagramm 300, in dem für unterschiedliche Drosseldurchmesser eines Lufttrockners die an die umgebende Atmosphäre abgegebene Druckluftmenge 302 über dem Druck am Auslass 304 angegeben wird.

In dem Diagramm 300 sind drei Kurven 306, 308, 310 gezeigt, die für jeweils unterschiedliche Drosseldurchmesser eines Lufttrockners die Zunahme der Druckluftmenge 302 in Relation zu dem am Auslass anliegenden Druck 304 setzen.

Alle drei Kurven 306, 308, 310 zeigen einen linearen Zusammenhang zwischen der Höhe der abgegebenen Druckluftmenge 302 als Funktion der Höhe des Druckes am Auslass 304.

Die Kurve 306 repräsentiert dabei den linearen Zusammenhang zwischen der Höhe der abgegebenen Druckluftmenge 302 als Funktion der Höhe des Druckes am Auslass 304 für einen Drosseldurchmesser von 3,6 mm.

Die Kurve 308 repräsentiert den linearen Zusammenhang zwischen der Höhe der abgegebenen Druckluftmenge 302 als Funktion der Höhe des Druckes am Auslass 304 für einen Drosseldurchmesser von 2,0 mm.

Die Kurve 310 repräsentiert den linearen Zusammenhang zwischen der Höhe der abgegebenen Druckluftmenge 302 als Funktion der Höhe des Druckes am Auslass 304 für einen Drosseldurchmesser von 1,5 mm.

In dem Diagramm ist weiterhin symbolisch die Zunahme des Geräuschpegels am Auslass durch einen Pfeil 312 dargestellt. Der Pfeil 312 zeigt an, dass entsprechend mit zunehmender Höhe der abgegebenen Druckluftmenge 302 bei entsprechend hohem Druck am Auslass 304 auch der Geräuschpegel am Auslass beim Entlüften einer Druckluftversorgungsanlage und insbesondere des Lufttrockners und/oder des Luftverteilermoduls der Druckluftversorgungsanlage zunimmt.

Dabei kann der dargestellte Druckbereich von 4 bar bis 20 bar in zwei Teildruckbereiche unterteilt werden, wobei der erste Teildruckbereich 314 den Bereich von 4 bar bis 12 bar repräsentiert und der zweite Teildruckbereich 316 den Bereich von 12 bar bis 20 bar repräsentiert. Insbesondere in dem Teildruckbereich zwischen 12 bar und 20 bar führt ein Entlüften der Druckluftversorgungsanlage zu einem Geräuschpegel der vergleichsweise hoch ist. Es ist daher bevorzugt die Druckluftversorgungsanlage nicht zu Entlüften, wenn der Druck am Auslass innerhalb dieses zweiten Teildruckbereichs 316 liegt. Sollte der Druck am Auslass innerhalb des zweiten Teildruckbereichs 316 liegen und trotzdem die Notwendigkeit bestehen, des Lufttrockner und/oder das Luftverteilermodul zu Entlüften, um den dort vorherrschenden Druck zu reduzieren, ist es daher bevorzugt, Druckluft aus dem Lufttrockner und/oder dem Luftverteilermodul in die Luftfedern einer Luftfederanlage umzuleiten, um so den Druck im Lufttrockner und/oder dem Luftverteilermodul soweit zu senken, dass der Druck am Auslass in dem ersten Teildruckbereich 314 liegt. Durch Befüllen der Luftfedern mit Druckluft kann der Druck am Auslass insbesondere soweit gesenkt werden, dass keine oder zumindest geringer dimensionierte Schalldämpfer verwendet werden müssen, damit der Geräuschpegel unterhalb eines vorgegebenen Grenzwertes liegt.

Entsprechend kann der Druck in dem ersten Teildruckbereich 314 durch Beaufschlagen von derjenigen der Luftfedern, deren Druck im Vergleich zu den Drücken in den übrigen Luftfedern die größte Druckdifferenz zu dem Druck in dem Lufttrockner und/oder in dem Luftverteilermodul aufweist der Druck auf Auslass soweit reduziert werden, dass auf Schalldämpfer vollständig oder wenigstens teilweise verzichtet werden kann.

Sobald der Druck am Auslass in dem ersten Teildruckbereich 314 liegt, kann die Druckluftversorgungsanlage entlüftet werden, ohne dass dabei ein Geräuschpegel entsteht der oberhalb eines kritischen, z.B. vordefinierten Grenzwertes liegt.

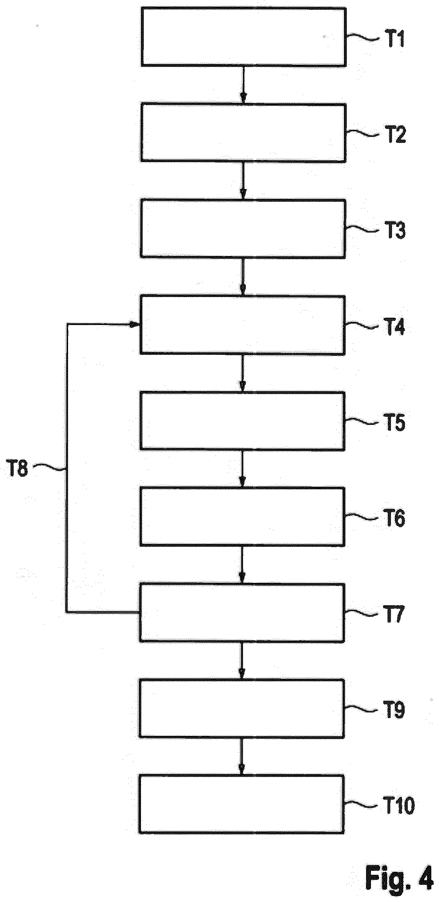

Fig. 4 zeigt schematisch ein Ablaufdiagramm für ein Verfahren zum Betreiben einer Druckluftversorgungsanlage. In dem Verfahren wird vor dem Entlüften diejenige der Luftfedern mit Druckluft befüllt, die im Vergleich zu den Drücken in den übrigen Luftfedern die größte Druckdifferenz zu dem Druck in dem Lufttrockner und/oder dem Luftverteilermodul aufweist.

In dem Verfahren wird zunächst der Verdichter der Druckluftversorgungsanlage in den Leerlauf gebracht (Schritt T1) und das Auslassventil des Auslasses Druckluftversorgungsanlage geschlossen (Schritt T2).

Mittels eines Steuergeräts, z.B. dem Steuergerät der Druckluftversorgungsanlage, wird eine Druckluftmenge und/oder eine Zeitdauer vorgegeben bzw. definiert mit der bzw. für die die Luftfedern einer Luftfederanlage mit Druckluft aus dem Lufttrockner und/oder dem Luftverteilermodul der Druckluftversorgungsanlage beaufschlagt werden sollen (Schritt T3).

In dem Verfahren wird zunächst diejenige der Luftfedern mit Druckluft beaufschlagt, deren Druck im Vergleich zu den Drücken in den übrigen Luftfedern den größten Druckunterschied zu dem Druck in dem Lufttrockner und/oder dem Luftverteilermodul aufweist (Schritt T4). Die Luftfeder wird insbesondere mit einer für diese Luftfeder vorgegebenen Druckluftmenge und/oder für eine für diese Luftfeder vor definierte Zeitdauer mit Druckluft befüllt.

Nachdem das Luftfederventil der Luftfeder mit dem größten Druckunterschied zu dem Druck in dem Lufttrockner und/oder dem Luftverteilermodul geschlossen wurde, wird das Luftfederventil derjenigen Luftfeder geöffnet, die im Vergleich zu den beiden verbleibenden Luftfedern den Druck mit dem größten Druckunterschied zu dem Druck in dem Lufttrockner und/oder dem Luftverteilermodul aufweist (Schritt T5). Wenn auch das Luftfederventil dieser zweiten Luftfeder geschlossen ist, wird das Luftfederventil derjenigen Luftfeder geöffnet, deren Druck im Vergleich zu dem Druck der verbleibenden Luftfeder die größere Druckdifferenz zu dem Druck in dem Lufttrockner und/oder dem Luftverteilermodul aufweist (Schritt T6). Anschließend wird die verbleibende Luftfeder mit Druckluft beaufschlagt (Schritt T7).

Für jede der Luftfedern kann eine individuelle Druckluftmenge und/oder Zeitdauer vorgegeben sein. Vorzugsweise werden die Luftfedern mit vergleichsweise geringem Druckluftmengen beaufschlagt, sodass sich das hintereinandergeschaltete Beaufschlagen der Luftfedern mit Druckluft nicht oder wenigstens kaum auf die Fahreigenschaften des Fahrzeugs auswirkt. Es kann jedoch sein, dass, nachdem jede der Luftfedern einmal mit der für die jeweilige Luftfeder vorgegebene Druckluftmenge und/oder für die für die jeweilige Luftfeder vor definierte Zeitdauer mit Druckluft beaufschlagt wurde, der Druck am Auslass noch nicht unter halb eines vorgegebenen Grenzwertes liegt. In diesem Fall werden die Luftfedern vorzugsweise in derselben Reihenfolge erneut mit Druckluft beaufschlagt (Schritt T8).

Auch bei dem erneuten Beaufschlagen der Luftfedern mit Druckluft kann für jede der Luftfedern eine Druckluftmenge und/oder eine Zeitdauer vorgegeben werden. Die für das erneute Beaufschlagen der Luftfedern mit Druckluft vorgegebene Druckluftmenge und/oder Zeitdauer kann unterschiedlich zu der für das erstmalige Beaufschlagen der Luftfedern mit Druckluft vorgegebenen Druckluftmenge und/oder Zeitdauer sein.

Nachdem die Luftfedern mit Druckluft befüllt wurden und alle Luftfederventile geschlossen sind, kann der Verdichter der Druckluftversorgungsanlage wieder aktiviert (Schritt T9) und das Auslassventil geöffnet werden (Schritt T10). Die Druckluftversorgungsanlage wird dann entlüftet. Dabei wird ein Teil der an die umgebende Atmosphäre abgegebene Druckluft in dem aktivierten Verdichter gespeichert, so dass die tatsächlich an die umgebende Atmosphäre abgegebene Druckluftmenge vergleichsweise geringer ist.

Zusätzlich oder alternativ kann in dem Verfahren vorgesehen sein, dass das Auslassventil der Druckluftversorgungsanlage während des Entlüftens mehrmals geöffnet und geschlossen wird, z.B. mit einer vorgegebenen Frequenz, sodass die Druckluft in mehreren Schritten an die umgebene Atmosphäre abgegeben wird. Dadurch kann der beim Entlüften entstehende Geräuschpegel weiter gesenkt werden.

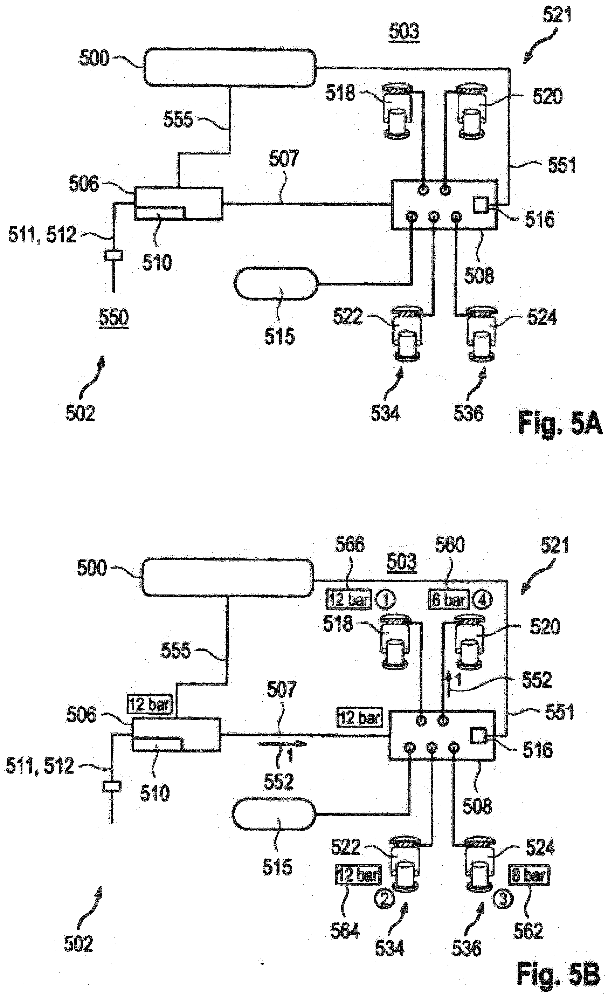

Fig. 5A zeigt schematisch eine mit einer Luftfederanlage 521 pneumatisch verbundene Druckluftversorgungsanlage 502, die als offenes System realisiert ist.

Die Druckluftversorgungsanlage 502 umfasst einen Einlass 511 und einen Auslass 512, die über einen gemeinsamen Anschluss realisiert sind. Weiterhin umfasst die Druckluftversorgungsanlage 502 ein Lufttrockner 510 und einen Verdichter 506. Wenn der Verdichter 506 Luft aus der umgebenden Atmosphäre 550 ansaugt, strömt diese durch den Einlass 511 und durch das Lufttrockner 510. Die von dem Lufttrockner 510 getrocknete Luft wird von dem Verdichter 506 als trockene Druckluft über eine Pneumatikhauptleitung 507 zu dem Luftverteilermodul 508 der Luftfederanlage 521 geleitet.

Das Luftverteilermodul 508 umfasst einen Drucksensor 516, der eine Höhe des Druckes in dem Luftverteilermodul 508 erfasst. Über eine Datenverbindung 551 ist der Drucksensor 516 mit dem Steuergerät 500 der Druckluftversorgungsanlage 502 verbunden. Mittels der Datenverbindung 551 kann ein Drucksensorsignal von dem Drucksensor 516 an das Steuergerät 500 übertragen werden. Das Drucksensorsignal repräsentiert insbesondere die Höhe des von dem Drucksensor 516 erfassten Druckes. Das Steuergerät 500 ist weiterhin über Steuerleitungen 552 mit dem Verdichter 506 verbunden, so dass das Steuergerät 500 mittels übertragener Steuerbefehle den Verdichter 506 steuern kann. Insbesondere kann das Steuergerät 500 den Verdichter 506 auf Basis der von dem Drucksensor 516 erfassten Höhe des Druckes in dem Luftverteilermodul 508 steuern.

Das Luftverteilermodul 508 umfasst fünf 2/2-Wege-Magnetventile. Eines dieser 2/2-Wege-Magnetventile ist mit einem Druckluftreservoir 515 der Druckluftversorgungsanlage 502. In dem Druckluftreservoir 515 kann Druckluft zwischengespeichert und bei Bedarf z.B. zum Befüllen von Luftfedern verwendet werden.

Die übrigen vier 2/2-Wege-Magnetventile sind als Luftfederventile jeweils den vier Luftfedern 518, 520, 522, 524 der Luftfederanlage 521 zugeordnet.

Mittels dem Luftverteilermodul 508 kann somit durch Öffnen der Luftfederventile Druckluft von dem Verdichter 506 über die Pneumatikhauptleitung 507 in die Luftfedern 518, 520, 522, 524 abgeführt werden.

Dabei befinden sich zwei der Luftfedern 518, 522 an der Vorderachse 534 des Fahrzeugs 503 und die anderen beiden Luftfedern 520, 524 an der Hinterachse 536 des Fahrzeugs 503.

Fig. 5B zeigt schematisch die in Bezug auf Fig. 5A beschriebene Druckluftversorgungsanlage 502. In der Fig. 5B ist die Umleitung von Druckluft in diejenige der Luftfedern 518, 520, 522, 524 eingezeichnet, die im Vergleich zu den Drücken in den übrigen Luftfedern die größte Druckdifferenz zu dem Druck in dem Lufttrockner 110 und/oder dem Luftverteilermodul 508 aufweist.

Dafür wird trockene Druckluft 552 über die Pneumatikhauptleitung 507 von dem Verdichter 506 zu dem Luftverteilermodul 508 abgeführt. Weiterhin wird das Luftfederventil derjenigen Luftfeder 520 geöffnet, deren Druck die größte Druckdifferenz zu dem Druck in dem Luftverteilermodul 508 aufweist.

In dem in Fig. 5B beispielhaft gezeigten Fall beträgt der Druck im Lufttrockner 510 und in dem Luftverteilermodul 508 12 bar. Auch der Druck in den beiden Luftfedern 518, 522 der Vorderachse 534 des Fahrzeugs 503 beträgt 12 bar. Jedoch sind die Drücke der Luftfedern 520, 524 der Hinterachse 536 des Fahrzeugs 503 niedriger als 12 bar und betragen hier beispielhaft 6 bar und 8 bar, wobei die Luftfeder 520, die sich in Fahrtrichtung rechts an der Hinterachse 536 des Fahrzeugs 503 befindet, einen Druck von 6 bar hat. Die Luftfeder 520 hinten rechts an der Hinterachse 536 weist also die größte Druckdifferenz zu dem Druck in dem Lufttrockner 510 auf und wird entsprechend als erstes mit Druckluft beaufschlagt.

Alternativ zu dem Fall, dass lediglich jeweils nur eine einzelne Luftfeder mit Druckluft beaufschlagt wird, können auch zwei Luftfedern zeitgleich mit Druckluft beaufschlagt werden. Dies ist insbesondere dann bevorzugt, wenn zwei Luftfedern im Wesentlichen denselben Druck aufweisen.

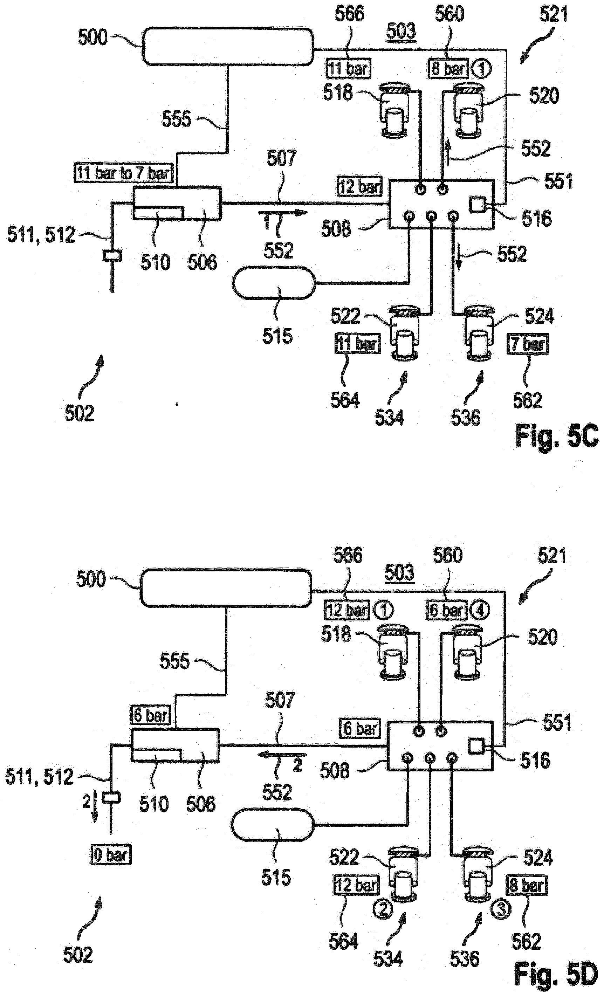

Eine solche Betriebssituation ist beispielhaft in Fig. 5C gezeigt. Fig. 5C zeigt schematisch die in Bezug auf Fig. 5A beschriebene Druckluftversorgungsanlage 500, wobei die Umleitung von Druckluft 552 zeitgleich in die beiden Luftfedern 520, 524 der Hinterachse 536 des Fahrzeugs 503 eingezeichnet ist.

In der hier gezeigten Betriebssituation weist das Lufttrockner 510 einen Druck von 11 bar auf. Die beiden Luftfedern 518, 522, der Vorderachse 534 des Fahrzeugs 503 weisen ebenfalls einen Druck von 11 bar auf. Zum Reduzieren des Druckes in dem Lufttrockner 510 wird trockene Druckluft 552 von dem Lufttrockner 510 über die Pneumatikhauptleitung 507 in das Luftverteilermodul 508 abgeführt. Die beiden Luftfederventile der Luftfedern 520, 524 der Hinterachse 534 werden geöffnet, sodass Druckluft 552 zeitgleich in die beiden Luftfedern 520, 524 einströmen kann. Dadurch wird der Druck in dem Lufttrockner 510 in diesem Beispiel von 11 bar auf 7 bar gesenkt.

Fig. 5D zeigt schematisch die mit Bezug auf Fig. 5A bis Fig. 5C beschriebene Druckluftversorgungsanlage 503 mit dem Unterschied, dass in der Fig. 5D durch Pfeile ein Entlüften der Druckluftversorgungsanlage 503 in die umgebende Atmosphäre 550 eingezeichnet ist.

Zum Entlüften der Druckluftversorgungsanlage 503 werden insbesondere die Luftfederventile geschlossen. Anschließend wird das Auslassventil des Auslasses 512 geöffnet, um die Druckluftversorgungsanlage 503 zu entlüften.

Dabei kann der Verdichter 506 aktiviert werden, um einen Teil der Druckluft zu speichern, so dass effektiv weniger Druckluft 552 an die umgebende Atmosphäre 550 abgegeben wird.

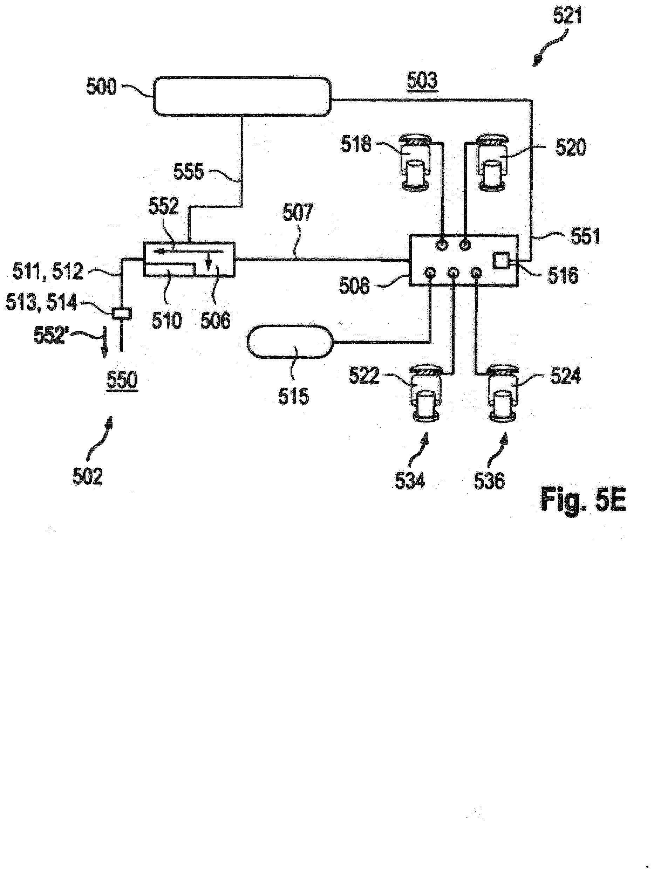

Eine entsprechende Betriebssituation ist in Fig. 5E gezeigt. Fig. 5E zeigt schematisch die in Bezug auf die Fig. 5A bis Fig. 5D beschriebene Druckluftversorgungsanlage 500.

Während des Entlüftens der Druckluftversorgungsanlage 500 ist der Verdichter 506 aktiviert, um einen Teil der Druckluft 552 zu speichern. In die umgebende Atmosphäre 550 wird dann eine entsprechend geringere Druckluftmenge 552' abgegeben, so dass der beim Entlüften der Druckluftversorgungsanlage 500 entstehende Geräuschpegel weiter reduziert werden kann.

Wiederum optional kann das Auslassventil des Auslasses 512 mehrfach hintereinander geöffnet und wieder geschlossen werden, so dass die Druckluft 552 jeweils in vergleichsweise kleineren Druckluftmengen an die umgebende Atmosphäre 550 abgegeben wird.

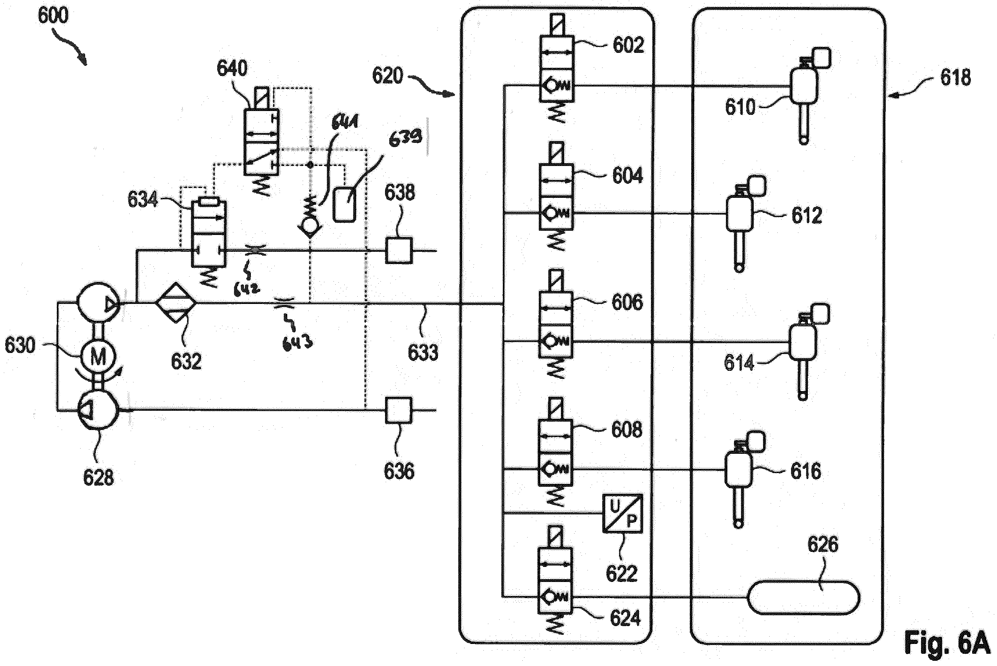

Fig. 6A zeigt eine schematisch dargestellte Druckluftversorgungsanlage 600, die über Luftfederventile 602, 604, 606, 608 mit Luftfedern 610, 612, 614, 616 einer Luftfederanlage 618 pneumatisch verbunden ist. Die Luftfederventile 602, 604, 606, 608 sind als 2/2-Wege-Magnetventile ausgebildet und Bestandteil eines Luftverteilermoduls 620.

Das Luftverteilermodul 620 umfasst weiterhin einen Drucksensor 622 zum Erfassen einer Höhe eines Druckes in dem Luftverteilermodul 620 und eine Gallerie 627 zum Verteilen der Druckluft auf die Luftfederventile 610, 612, 614, 616.

Das Luftverteilermodul 620 umfasst ein weiteres 2/2-Wege-Magnetventil, das ein Reservoirventil 624 ist. An das Reservoirventil 624 ist ein Druckluftreservoir 626 angeschlossen und kann darüber mit Druckluft befüllt werden. Ebenso kann Druckluft aus dem Druckluftreservoir 626 entnommen und z.B. in die Luftfedern 610, 612, 614, 616 abgeführt werden. Durch Befüllen der Luftfedern 610, 612, 614, 616 mit Druckluft kann das Fahrzeug relativ zu einem Untergrund angehoben werden.

Die Druckluftversorgungsanlage 600 umfasst weiterhin einen Verdichter 628, der einen Elektromotor 630 aufweist, mit dem z.B. Kolben zum Komprimieren von angesaugter Luft angetrieben werden können. Druckluft wird dann im Betrieb von dem Verdichter 628 über ein Lufttrockner 632 über eine Pneumatikhauptleitung 633 an das Luftverteilermodul 620 abgeführt. Über das Luftverteilermodul 620 wird also von dem Lufttrockner 632 getrocknete Druckluft auf die Luftfedern 610, 612, 614, 616 und das Druckluftreservoir 626 verteilt. Der Verdichter 628 saugt Luft aus der umgebenden Atmosphäre über einen mit einem Filter versehenen Einlass 636 an. Durch den Filter wird verhindert, dass der Verdichter 628 durch Partikel verunreinigt wird.

Die Druckluftversorgungsanlage 600 umfasst weiterhin ein pneumatisch mit dem Verdichter 618 und dem Lufttrockner 632 verbundenes Relaisventil 634. Das Relaisventil 634 ist wiederum pneumatisch mit einem Auslass 638 verbunden, der mit Schalldämpfern ausgestattet ist. Durch die Schalldämpfer kann verhindert werden, dass der Geräuschpegel beim Entlüften der Druckluftversorgungsanlage 600 oberhalb eines vorgegebenen Grenzwertes liegt. Durch Befüllen der Luftfedern mit Druckluft kann der Druck am Auslass soweit reduziert werden, dass es möglich ist, auf Schalldämpfer vollständig oder wenigstens teilweise zu verzichten.

Die Druckluftversorgungsanlage 600 umfasst weiterhin ein Zwischenvolumen 639, das über ein Ventil 640 mit Druckluft beaufschlagt werden kann, um den Druck in dem Lufttrockner 632 weiter zu senken. Weiterhin ist ein Rückschlagventil 641 vorgesehen. Die Druckluftversorgungsanlage 600 weist weiterhin Drosseln 642, 643 auf.

Zum Belüften und Entlüften der Druckluftversorgungsanlage 600 wird ein Ein- bzw. Auslassventil entsprechend von einem Steuergerät der Druckluftversorgungsanlage 600 angesteuert.

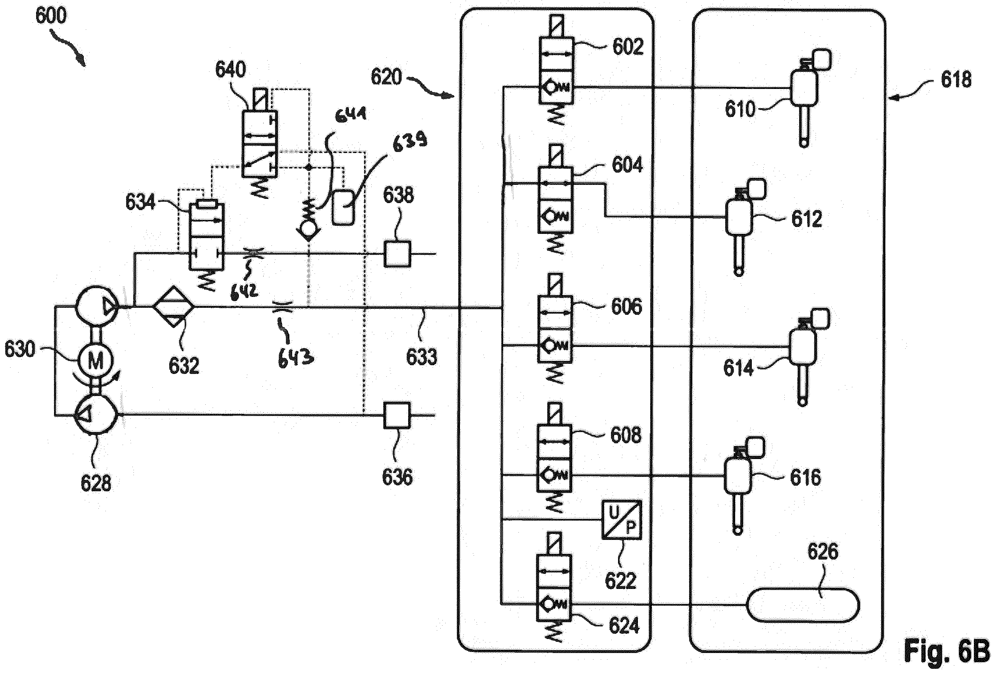

Fig. 6B bis Fig. 6E zeigen die in Bezug auf Fig. 6A beschriebene Druckluftversorgungsanlage 600 in jeweils unterschiedlichen Betriebssituationen.

In Fig. 6B ist die in Bezug auf die Fig. 6A beschriebene Druckluftversorgungsanlage 600 gezeigt, wobei das Luftfederventil 604 einer ersten Luftfeder 612 geöffnet ist, um Druckluft in die erste Luftfeder 612 umzuleiten. Die erste Luftfeder 612 befindet sich in einem Fahrzeug in Fahrtrichtung rechts an der Vorderachse.

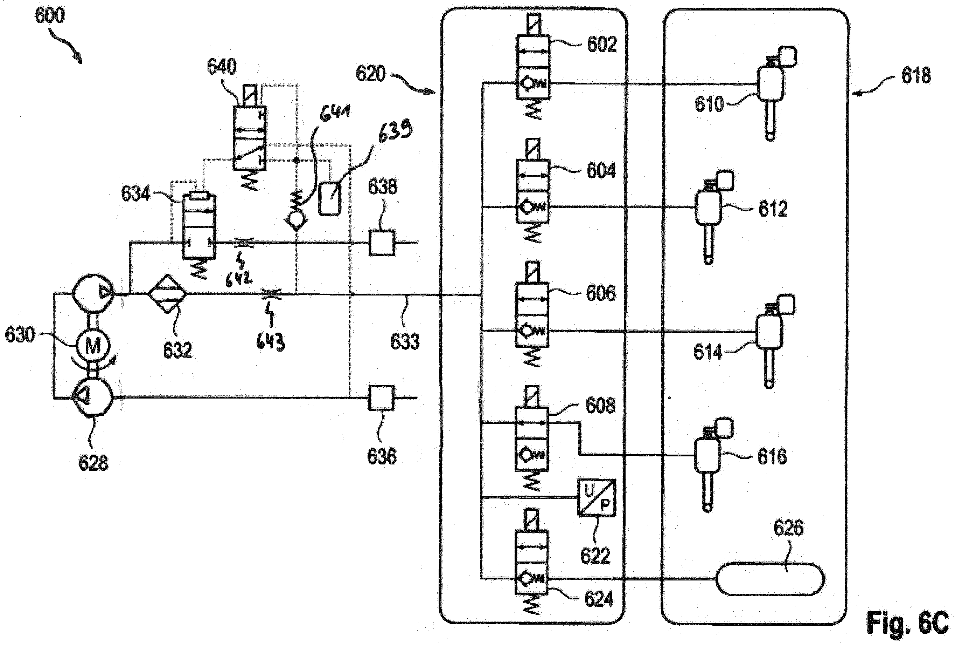

Fig. 6C zeigt die in Bezug auf die Fig. 6A und Fig. 6B beschriebene Druckluftversorgungsanlage 600 in einer Betriebssituation, in der das Luftfederventil 608 einer zweiten Luftfeder 616 geöffnet ist, um Druckluft in die zweite Luftfeder 616 umzuleiten. Die zweite Luftfeder 616 befindet sich in einem Fahrzeug in Fahrtrichtung rechts an der Hinterachse.

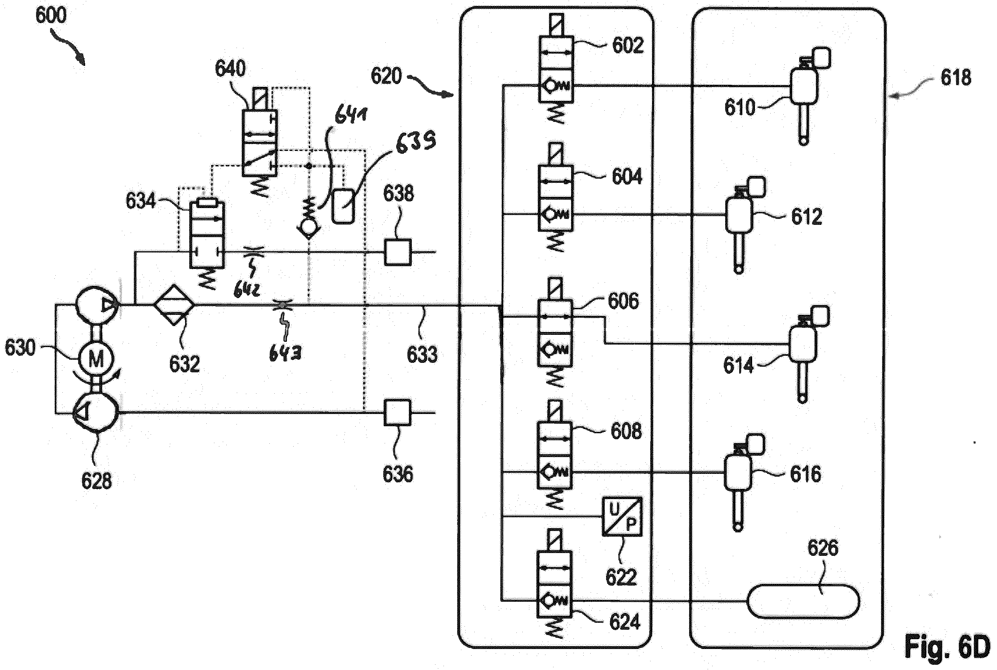

Fig. 6D zeigt die in Bezug auf die Fig. 6A bis Fig. 6C beschriebene Druckluftversorgungsanlage 600 in einer weiteren Betriebssituation, in der das Luftfederventil 606 einer dritten Luftfeder 614 geöffnet ist, um Druckluft in die dritte Luftfeder 614 umzuleiten. Die dritte Luftfeder 614 befindet sich in einem Fahrzeug in Fahrtrichtung links an der Hinterachse.

Wie aus den Fig. 6B bis Fig. 6D hervorgeht, ist in der jeweiligen Betriebssituation immer nur ein einziges der Luftfederventile 602, 604, 606, 608 geöffnet und die übrigen Luftfederventile 602, 604, 606, 608 sind geschlossen. Die Luftfedern 610, 612, 614, 616 werden also zeitlich nacheinander einzeln mit Druckluft aus dem Lufttrockner 632 und/oder dem Luftverteilermodul 620 beaufschlagt.

Dabei wird jede der Luftfedern 610, 612, 614, 616 jeweils mit einer vorgegebenen Druckluftmenge und/oder für eine vordefinierte Zeitdauer mit Druckluft befüllt.

Die überschüssige Druckluft aus dem Lufttrockner 632 und/oder dem Luftverteilermodul 620 wird somit portionsweise auf die Luftfedern 610, 612, 614, 616 verteilt. Die Luftfedern 610, 612, 614, 616 werden insbesondere solange zeitlich nacheinander mit Druckluft beaufschlagt, bis die überschüssige Druckluft aus dem Lufttrockner 632 und/oder dem Luftverteilermodul 620 auf die Luftfedern verteilt ist. Die Druckluftmenge der überschüssigen Druckluft bemisst sich insbesondere daran, um welchen Betrag der Druck in dem Lufttrockner 632 und/oder dem Luftverteilermodul 620 reduziert werden muss, damit am Auslass 638 ein Druck vorherrscht, der beim Entlüften der Druckluftversorgungsanlage 600 in die umgebende Atmosphäre nicht zu einem Geräuschpegel oberhalb eines vorgegebenen Grenzwertes führt.

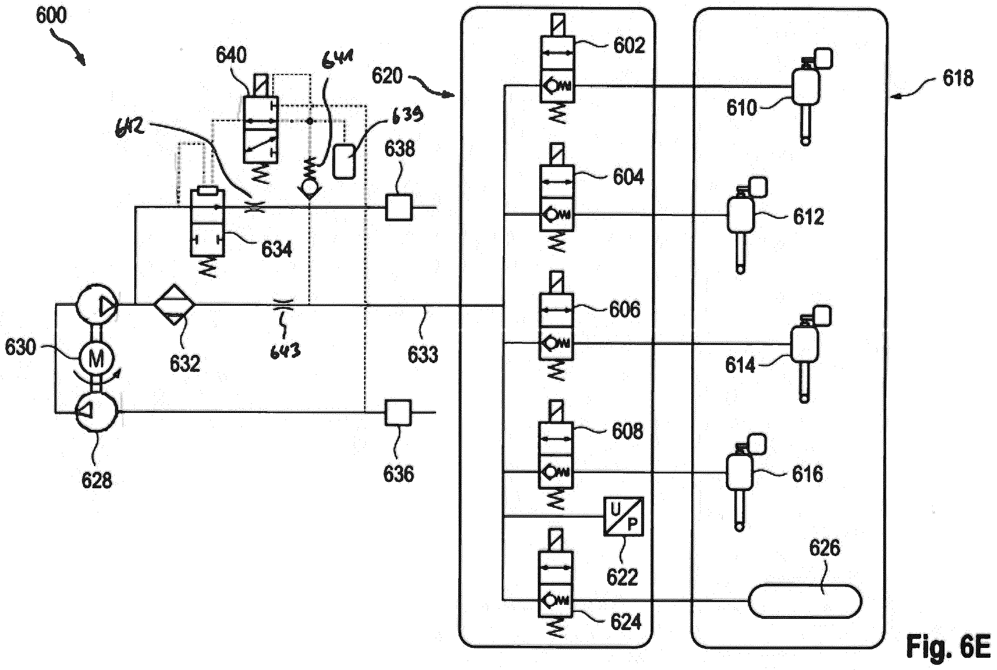

Fig. 6E zeigt die in Bezug auf die Fig. 6A bis Fig. 6D beschriebene Druckluftversorgungsanlage 600 in einer Betriebssituation, in der alle Luftfederventile 602, 604, 606, 608 geschlossen und das Relaisventil 634 und der Auslass 638 zum Entlüften Druckluftversorgungsanlage 600 geöffnet sind. Da vor dem Entlüften die überschüssige Druckluft auf die Luftfedern 610, 612, 614, 616 verteilt wurde, liegt an dem Auslass 638 ein vergleichsweise geringer Druck an, so dass das Entlüften der Druckluftversorgungsanlage 600 nicht zu einem Geräuschpegel oberhalb eines vorgegebenen Grenzwertes führt.

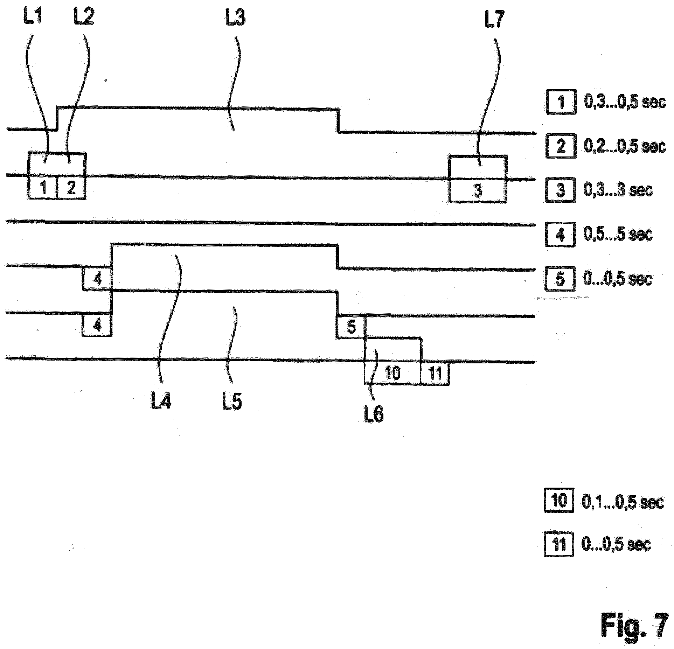

Fig. 7 zeigt ein Logikschaltbild, das eine Abfolge von Schritte beim Befüllen von Luftfedern mit Druckluft repräsentiert.

Zunächst wird das Einlassventil für eine Zeitdauer von 0,3 Sekunden bis 0,5 Sekunden geöffnet (Schritt L1), sodass Luft aus der umgebenden Atmosphäre in die Druckluftversorgungsanlage einströmen kann. Das Einlassventil bleibt dann für weitere 0,2 Sekunden bis 0,5 Sekunden geöffnet (Schritt L2). Während dieser Zeitdauer wird der Verdichter aktiviert (Schritt L3), um Luft aus der umgebenden Atmosphäre anzusaugen. Die Schritte L2 und L3 beginnen zeitgleich. Allerdings bleibt der Verdichter aktiviert, auch wenn das Einlassventil wieder geschlossen ist.

Nachdem das Einlassventil für 0,5 Sekunden bis 5 Sekunden geschlossen ist, werden zeitgleich das Boost-Ventil (Schritt L4) und die Luftfederventile der Luftfedern der Vorderachse des Fahrzeugs (Schritt L5) geöffnet. Die Luftfederventile der Luftfedern der Hinterachse des Fahrzeugs bleiben währen dieser Zeitdauer geschlossen.

In dem hier beschriebenen Logikschaltbild wird angenommen, dass der Druck in den Luftfedern der Hinterachse geringer ist, als der Druck in den Luftfedern der Vorderachse. Das Boost-Ventil ist optional und könnte auch entweder nicht geöffnet werden oder erst gar nicht in der Druckluftversorgungsanlage vorhanden sein.

Nachdem die Luftfederventile der Luftfedern an der Vorderachse des Fahrzeugs wieder geschlossen wurden, werden nach 0 Sekunden bis 0,5 Sekunden die Luftfederventile der Luftfedern der Hinterachse geöffnet (Schritt L6), um die Luftfedern der Hinterachse mit Druckluft zu befüllen. Die Luftfedern der Hinterachse werden in dem hier beispielhaft beschriebenen Logikschaltplan für eine Zeitdauer von 0,1 Sekunde bis 0,5 Sekunden mit Druckluft beaufschlagt.

Nachdem die Luftfederventile der Luftfedern an der Hinterachse wieder geschlossen wurden, wird nach 0 Sekunden bis 0,5 Sekunden das Auslassventil für eine Zeitdauer von 0,5 Sekunden bis 3 Sekunden geöffnet (Schritt L7), um die Druckluftversorgungsanlage zu entlüften.

Dadurch, dass Druckluft in die Luftfedern der Vorderachse und der Hinterachse des Fahrzeugs abgeführt wird, kann die Höhe des Druckes am Auslassventil entsprechend reduziert werden. Ein Entlüften der Druckluftversorgungsanlage ist dann bei einem vergleichsweise geringeren Druck möglich, sodass entsprechend auch der beim Entlüften entstehende Geräuschpegel vergleichsweise geringer ist.

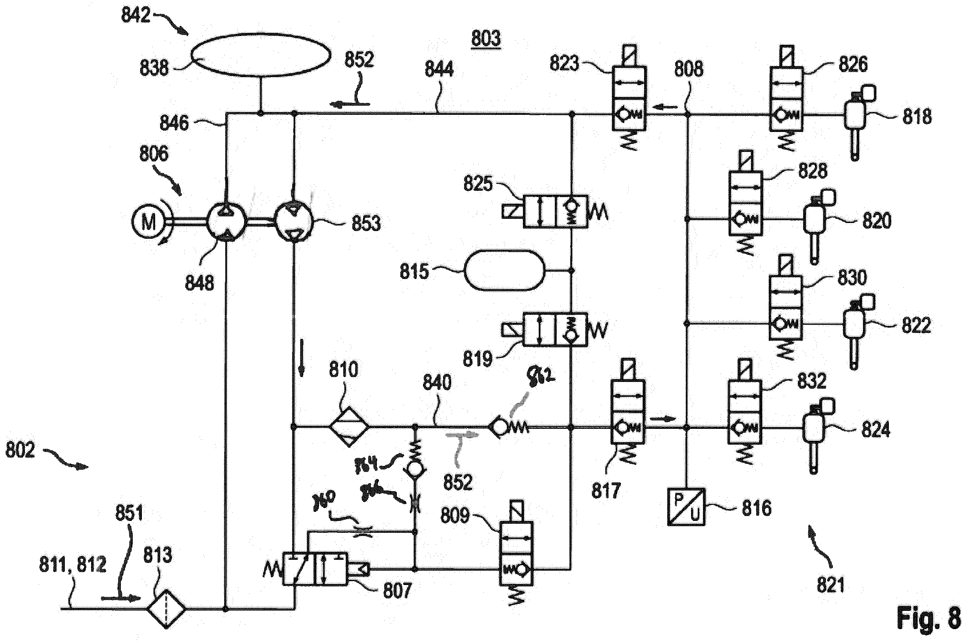

Fig. 8 zeigt schematisch eine mit einer Luftfederanlage 821 pneumatische verbundene Druckluftversorgungsanlage 802, die als geschlossenes System realisiert ist und einen Zusatzspeicher 838 aufweist.

Die Druckluftversorgungsanlage ist Bestandteil eines Fahrzeugs 803.

Die Druckluftversorgungsanlage 802 umfasst einen Einlass 811 und einen Auslass 812 mit einem Filter 813 zum Filtern von angesaugter Luft 850. Zum Ansaugen von Luft 850 umfasst die Druckluftversorgungsanlage 802 einen Verdichter 806. Die Luft 850 wird von dem Verdichter 806 komprimiert und als Druckluft 851 an das Lufttrockner 810 der Druckluftversorgungsanlage 802 weitergeleitet.

Von dem Lufttrockner 810 wird die trockene Druckluft 852 über eine Pneumatikhauptleitung 840 an das Luftverteilermodul 808 weitergeleitet. **In** der Pneumatikhauptleitung 840 ist ein Rückschlagventil 862 vorgesehen. Die Pneumatikhauptleitung 840 ist weiterhin pneumatisch über ein Rückschlagventil 864 und Drosseln 860, 866 mit einem Relaisventil 807 verbunden. Das Luftverteilermodul 808 umfasst vier Luftfederventile 826, 828, 830, 832. Außerdem umfasst das Luftverteilermodul 808 einen Drucksensor 816 zum Messen einer Höhe des Druckes in dem Luftverteilermodul 808. Über die Luftfederventile 826, 828, 830, 832 ist das Luftverteilermodul 808 jeweils mit den Luftfedern 818, 820, 822, 824 verbunden. Durch Öffnen der Luftfederventile 826, 828, 830, 832 können so die Luftfedern 818, 820, 822, 824 der Luftfederanlage 821 mit Druckluft aus der Druckluftversorgungsanlage 802 beaufschlagt werden, z.B., um das Fahrzeug 803 relativ zum Untergrund anzuheben.

Um Druckluft 852 in das Luftverteilermodul 808 umzuleiten, wird ein vorgeschaltetes Separationsventil 817, das als 2/2-Wege Magnetventil ausgebildet ist, geöffnet.

Zusätzlich oder alternativ könnte die Druckluft 852 auch durch Öffnen eines Reservoirventils 819 in ein Druckluftreservoir 815 der Druckluftversorgungsanlage 802 abgeführt werden.

Druckluft 852, die von dem Luftverteilermodul 808 zurück in Richtung des Auslasses 812 befördert werden soll, durchströmt ein Rückflussventil 823, das ebenfalls als 2/2-Wege Magnetventil ausgebildet ist. Das Rückflussventil 823 durchströmende Druckluft 825 kann über ein Booster-Ventil 825 in das Druckluftreservoir 815 abgeführt werden. Alternativ oder zusätzlich kann das Rückflussventil 823 durchströmende Druckluft 852 in ein Zwischenvolumen 838 abgeführt werden. Durch Abführen der Druckluft 852 in das Zwischenvolumen 838, kann die Höhe des Druckes am Auslass 812 zusätzlich reduziert werden. Zum Entlüften der Druckluftversorgungsanlage 802 umfasst diese weiterhin ein Auslassventil 809 und ein Relaisventil 807, die beide als ein 2/2-Wege Magnetventil ausgebildet sind. Ein Entlüften der Druckluftversorgungsanlage 802 kann dann bei einem vergleichsweise geringeren Druck erfolgen.

### Bezugszeichenliste [Teil der Beschreibung]

- 1, 1': Verdichteranschluss
- 2, 2': Druckluftversorgungsanschluss
- 3, 3': Auslass
- 50, 50': umgebende Atmosphäre
- 51, 51': angesaugte Luft
- 52, 52': Druckluft
- 53, 53': Druckluft
- 54, 54': Druckluft
- 55, 55': Datenverbindung
- 56, 56': Steuerleitung
- 100, 100': Steuergerät
- 101, 100': Fahrzeug
- 102, 102': Druckluftversorgungsanlage
- 103, 103': Pneumatiksystem
- 106, 106': Verdichter
- 108, 108': Luftverteilermodul
- 110, 110': Lufttrockner
- 111, 111': Einlassventil
- 112, 112': Auslassventil
- 116, 116': Drucksensor
- 118, 120, 122, 124, 118', 120', 122', 124': Luftfedern
- 121, 121': Luftfederanlage
- 126, 128, 130, 132, 126', 128', 130', 132': Luftfederventile
- 129: Gallerie
- 131: Pneumatikhauptleitung
- 300: Diagramm
- 302: an die umgebende Atmosphäre abgegebene Druckluftmenge
- 304: Druck am Auslass
- 306, 308, 310: Kurven
- 312: Pfeil
- 314: erster Teildruckbereich
- 316: zweiter Teildruckbereich
- 500: Steuergerät
- 502: Druckluftversorgungsanlage
- 503: Fahrzeugs
- 506: Verdichter
- 507: Pneumatikhauptleitung
- 508: Luftverteilermodul
- 510: Lufttrockner
- 511: Einlass
- 512: Auslasses
- 515: Druckluftreservoir
- 516: Drucksensor
- 518, 520, 522, 524: Luftfedern
- 521: Luftfederanlage
- 534: Vorderachse
- 536: Hinterachse
- 550: umgebenden Atmosphäre
- 551: Datenverbindung
- 552: Druckluft
- 552': geringere Druckluftmenge
- 555: Steuerleitung
- 600: Druckluftversorgungsanlage
- 602, 604, 606, 608: Luftfederventile
- 610, 612, 614, 616: Luftfedern
- 618: Luftfederanlage
- 620: Luftverteilermodul
- 622: Drucksensor
- 624: Reservoirventil
- 626: Druckluftreservoir
- 627: Gallerie
- 628: Verdichter
- 630: Elektromotor
- 632: Lufttrockner
- 634: Relaisventil
- 636: Einlass
- 638: Auslass
- 640: Auslassventil
- 802: Druckluftversorgungsanlage
- 803: Fahrzeug
- 806: Verdichter
- 808: Luftverteilermodul
- 810: Lufttrockner
- 811: Einlass
- 812: Auslass
- 813: Filter
- 815: Druckluftreservoir
- 816: Drucksensor
- 817: Separationsventil
- 818, 820, 822, 824: Luftfedern
- 819: Reservoirventil
- 821: Luftfederanlage
- 823: Rückflussventil
- 825: Booster-Ventil
- 826, 828, 830, 832: Luftfederventile
- 838: Zusatzspeicher
- 840: Pneumatikhauptleitung
- 850: angesaugte Luft
- 851: Druckluft
- 852: Druckluft
- 860: Drossel
- 862: Rückschlagventil
- 864: Rückschlagventil
- 866: Drossel
- S1: Verdichter in den Leerlauf bringen
- S2: Auslassventil schließen
- S3: öffnen der Luftfederventile
- S4: einstellen eines Gleichgewichtsdrucks
- S5: schließen der Luftfederventile
- S6: öffnen des Auslassventils
- T1: Verdichter in den Leerlauf bringen
- T2: Auslassventil schließen
- T3: Druckluftmenge und/oder eine Zeitdauer vorgeben
- T4: erste Luftfeder mit Druckluft beaufschlagen
- T5: zweite Luftfeder mit Druckluft beaufschlagen
- T6: dritte Luftfeder mit Druckluft beaufschlagen
- T7: vierte Luftfeder mit Druckluft beaufschlagen
- T8: erneutes Befüllen der Luftfedern
- T9: aktivieren des Verdichters
- T10: öffnen des Auslassventils
- L1: öffnen des Einlassventils
- L2: offenhalten des Einlassventils
- L3: aktivieren des Verdichters
- L4: aktivieren des Booster-Ventils
- L5: Befüllen der Luftfedern der Vorderachse für eine vordefinierte Zeitdauer
- L6: Befüllen der Luftfedern der Hinterachse für eine vordefinierte Zeitdauer
- L7: öffnen des Auslassventils

## Patentansprüche

1. Verfahren zum Betreiben eines Pneumatiksystems (103, 103') aufweisend eine Druckluftversorgungsanlage (102, 102', 502, 600, 802) und eine mit der Druckluftversorgungsanlage (102, ..., 802) pneumatisch verbundene Luftfederanlage (121, 121', 521, 621, 821), für ein Fahrzeug (101, 101', 503, 803), wobei
- die Druckluftversorgungsanlage (102, ..., 802) eine Pneumatikhauptleitung und einen Lufttrockner (110, 110', 510, 632, 810, 910) in der Pneumatikhauptleitung aufweist und die Pneumatikhauptleitung einen Verdichteranschluss (1) zu einem Verdichter (106, 106', 506, 628, 806, 906), und einen Druckluftversorgungsanschluss (2) zu einem Luftverteilermodul (108, 108', 508, 808, 920) aufweist, wobei
- die Luftfederanlage eine Anzahl Luftfedern (118, 120, 122, 124, 118', 120', 122', 124', 518, 520, 522, 524, 610, 612, 614, 616, 818, 820, 822, 824, 918, 920, 922, 924) aufweist, die über eine Galerie der Luftfederanlage (121, ..., 900), pneumatisch verbunden sind, und
- das Pneumatiksystem (103, 103') ein Steuergerät (100, 100', 500) zum Steuern der Druckluftversorgungsanlage (102, ..., 902) und der Luftfederanlage (121, ..., 900) aufweist, und wobei in dem Verfahren
- die Druckluftversorgungsanlage (102, ..., 802) vor einem Entlüften der Druckluftversorgungsanlage von dem Steuergerät (100, ..., 600) so angesteuert wird, dass Druckluft (54, 54', 552, 852) aus dem Lufttrockner (110, ..., 810) und/oder dem Luftverteilermodul (108, ..., 808) bei einem geschlossenen Auslassventil (112, 112', 640, 809) und bei ausgeschaltetem Verdichter (106, ..., 906) in eine erste Luftfeder (118, ..., 824) der Luftfederanlage (121, ..., 821) abgeführt wird,
**dadurch gekennzeichnet, dass**
- als die erste Luftfeder (118, ..., 824) diejenige Luftfeder (118, ..., 824) ermittelt wird, die vor dem Abführen von Druckluft (54, ..., 852) aus dem Lufttrockner (110, ..., 810) und/oder dem Luftverteilermodul (108, ..., 808) die größte Druckdifferenz zu dem Druck (54, ..., 852) in dem Lufttrockner (110,..., 810) oder dem Luftverteilermodul (108, ..., 808) aufweist,
- Druckluft (54, ..., 852) aus dem Lufttrockner (110, ..., 810) und/oder dem Luftverteilermodul (108, ..., 808) zunächst in die als erste Luftfeder (118, ..., 824) ermittelte Luftfeder abgeführt wird, und
- sich zeitlich an das Abführen von Druckluft (54, ..., 852) in die erste Luftfeder (118, ..., 824) anschließend in dem Lufttrockner (110, ..., 810) und/oder dem Luftverteilermodul (108, ..., 808) verbliebene Druckluft (54, ..., 852) in eine zweite Luftfeder (118, ..., 824) der Luftfederanlage (121, ..., 821) und/oder ein Zwischenvolumen (838) abgeführt wird.

2. Verfahren nach Anspruch 1, **dadurch gekennzeichnet, dass** nach dem Beaufschlagen der ersten und zweiten Luftfeder (118, ..., 824,) mit Druckluft (54, ..., 852), die restliche Druckluft aus dem Lufttrockner (110, ..., 810) und/oder dem Luftverteilermodul (108, ..., 808) durch den Auslass (112, ..., 812) in die umgebende Atmosphäre (50, 50', 550) entlüftet wird.

3. Verfahren nach wenigstens einem der vorstehenden Ansprüche, **dadurch gekennzeichnet, dass** zeitlich nach dem Abführen von Druckluft in die Luftfedern (118, ..., 824) und vor einem Entlüften von Druckluft aus dem Lufttrockner (110, ..., 810) und/oder dem Luftverteilermodul (108, ..., 808) durch den Auslass (112, ..., 812) in die umgebende Atmosphäre (50, 50', 550) Druckluft (54, ..., 852) aus dem Lufttrockner (110, ..., 810) und/oder dem Luftverteilermodul (108, ..., 808) in das Zwischenvolumen (838) abgeführt wird.

4. Verfahren nach wenigstens einem der vorstehenden Ansprüche, **dadurch gekennzeichnet, dass** die erste und zweite Luftfeder (118, ..., 824) mit Druckluft aus dem Lufttrockner (110, ..., 810) beaufschlagt werden, falls mit einem Drucksensor (116, ..., 816) zunächst eine Höhe des Druckes (54, ..., 852) in dem Luftverteilermodul (102, ..., 802) gemessen wird, die kleiner ist als 12 bar, insbesondere kleiner ist als 11 bar, bevorzugt kleiner ist als 10 bar, besonders bevorzugt zwischen 0 bar und 12 bar beträgt.

5. Verfahren nach wenigstens einem der vorstehenden Ansprüche, **dadurch gekennzeichnet, dass** die Druckluftversorgungsanlage (102, ..., 802) von dem Steuergerät (100, ..., 600) so angesteuert wird, dass die Druckluft (54, ..., 852) in einer vorgegebenen Druckluftmenge (54, ..., 852) und/oder für eine vorgegebene Zeitdauer (T4) in die erste und zweite Luftfeder (118, ..., 824) abgeführt wird.

6. Verfahren nach einem der vorstehenden Ansprüche, **dadurch gekennzeichnet, dass**
- Druckluft (54, ..., 852) aus dem Lufttrockner (110, ..., 810) und/oder dem Luftverteilermodul (108, ..., 808) nach dem Befüllen der ersten und zweiten Luftfeder (118, ..., 824) anschließend Druckluft in die übrigen Luftfedern (118, ..., 824) abgeführt wird, wobei zeitlich nacheinander jeweils diejenige der Luftfedern (118, ..., 824) mit Druckluft befüllt wird, deren Druck (562) im Vergleich zu den Drücken der anderen übrigen Luftfedern (118, ..., 824) den größten Unterschied zu dem Druck (54, ..., 852) in dem Lufttrockner (110, ..., 810) und/oder in dem Luftverteilermodul (108, 108') aufweist.

7. Verfahren nach Anspruch 3, **dadurch gekennzeichnet, dass** gemäß der anhand der größten Druckdifferenz zu dem Druck (54, ..., 852) in dem Lufttrockner (110, ..., 810) und/oder in dem Luftverteilermodul (108, ..., 808) ermittelten Reihenfolge der Luftfedern (118, ..., 824), die Luftfedern (118, ..., 824) in derselben Reihenfolge erneut zeitlich nacheinander mit einer vorgegebenen Druckluftmenge (54, ..., 852) und/oder jeweils für eine vordefinierte Zeitdauer (T4) mit Druckluft aus dem Lufttrockner (110, ..., 810) und/oder dem Luftverteilermodul (108, ..., 808) beaufschlagt werden.

8. Verfahren nach einem der vorstehenden Ansprüche, **dadurch gekennzeichnet, dass** für jede der Luftfedern (118, ..., 824) eine Druckluftmenge individuell vorgegeben und die Druckluftversorgungsanlage (102, ..., 802) von dem Steuergerät (100, ..., 1000) so angesteuert wird, dass Druckluft in der jeweils vorgegebenen Druckluftmenge (54, ..., 852) in die entsprechende der Luftfedern (118, ..., 824) abgeführt wird.

9. Verfahren nach einem der vorstehenden Ansprüche, **dadurch gekennzeichnet, dass** für jede der Luftfedern (118, ..., 824) individuell eine Zeitdauer (T4) vorgegeben und die Druckluftversorgungsanlage (102, ..., 802) von dem Steuergerät (100, ..., 600) so angesteuert wird, dass Druckluft für die jeweils vorgegebene Zeitdauer (T4) in die entsprechende der Luftfedern (118, ..., 824) abgeführt wird.

10. Verfahren nach wenigstens einem der vorstehenden Ansprüche, **dadurch gekennzeichnet, dass** sich die erste Luftfeder (118, ..., 122') an einer anderen Fahrzeugachse als die zweite Luftfeder (118, ..., 122') befindet und die erste Luftfeder (118, ..., 122') und die zweite Luftfeder (118, ..., 122') jeweils zusammen mit weiteren Luftfedern (118, ..., 122') derselben Fahrzeugachse mit Druckluft beaufschlagt werden.

11. Verfahren nach Anspruch 9, **dadurch gekennzeichnet, dass**
- falls der Druck (564, 566) der Luftfedern (118, 122, 118', 122') einer Vorderachse (534, 634) des Fahrzeugs (101, ..., 803) größer als der Druck (560, 562) der Luftfedern (120, 124, 120', 124') einer Hinterachse (536, 636) des Fahrzeugs (101, 101') ist
- vor dem Entlüften Druckluft (54, ..., 852) von den Luftfedern (118, ..., 122') der Vorderachse (534, 634) in die Luftfedern (120, ..., 124') der Hinterachse (536, 636) abgeführt wird.

12. Verfahren nach wenigstens einem der Ansprüche 10 oder 11, **dadurch gekennzeichnet, dass** - falls der Druck (560, 562) der Luftfedern (120, ..., 124') einer Hinterachse (536, 636) des Fahrzeugs (101, 101', 503, 803) größer als der Druck (564, 566) der Luftfedern (118, ..., 122') einer Vorderachse (534, 634) des Fahrzeugs (101, ..., 803) ist - vor dem Entlüften Druckluft von den Luftfedern (120, ..., 124') der Hinterachse (536, 636) in die Luftfedern (118, ..., 122') der Vorderachse (534, 634) abgeführt wird.

13. Verfahren nach wenigstens einem der vorstehenden Ansprüche, **dadurch gekennzeichnet, dass** die Druckluftversorgungsanlage (102, ..., 802 ') von dem Steuergerät (100, ..., 600) so angesteuert wird, dass das Auslassventil (112, 112', 640) in vordefinierten Zeitabständen geöffnet und wieder geschlossen wird, so dass die Druckluftversorgungsanlage (102, ..., 802) schrittweise durch den Auslass (112, ..., 812) entlüftet wird.

14. Verfahren nach wenigstens einem der vorstehenden Ansprüche, **dadurch gekennzeichnet, dass** die Druckluftversorgungsanlage (102, ..., 802) von dem Steuergerät (100, ..., 600) so angesteuert wird, dass der Verdichter (106, ..., 806) während eines Entlüftens von Druckluft durch den Auslass (112, ..., 812) einen Teil der Druckluft speichert, so dass die Druckluftversorgungsanlage (102, ...,802) bei einer vergleichsweise geringeren Druckdifferenz in die umgebende Atmosphäre (50, 50', 550) entlüftet wird.

15. Verfahren nach wenigstens einem der vorstehenden Ansprüche, **dadurch gekennzeichnet, dass** die Druckluftversorgungsanlage (102, ..., 802) einen Zusatzspeicher (838) umfasst, und zusätzlich zu den Luftfedern (118, ..., 824) und vor dem Entlüften der Druckluftversorgungsanlage (102, ..., 802) der Zusatzspeicher (838) mit einer vorgegebenen Druckluftmenge (54, ..., 852) und/oder für eine vordefinierte Zeitdauer (T4) mit Druckluft aus dem Lufttrockner (110, ..., 810) und/oder dem Luftverteilermodul (108, ..., 808) beaufschlagt wird.

## Claims

1. Method for operating a pneumatic system (103, 103') having a compressed-air supply system (102, 102', 502, 600, 802) and an air spring system (121, 121', 521, 621, 821) pneumatically connected to the compressed-air supply system (102, ..., 802), for a vehicle (101, 101', 503, 803), wherein
- the compressed-air supply system (102, ..., 802) has a pneumatic main line and an air dryer (110, 110', 510, 632, 810, 910) in the pneumatic main line and the pneumatic main line has a compressor connection (1) to a compressor (106, 106', 506, 628, 806, 906), and a compressed-air supply connection (2) to an air distributor module (108, 108', 508, 808, 920), wherein
- the air spring system has a number of air springs (118, 120, 122, 124, 118', 120', 122', 124', 518, 520, 522, 524, 610, 612, 614, 616, 818, 820, 822, 824, 918, 920, 922, 924) which are pneumatically connected via a gallery of the air spring system (121, ..., 900), and
- the pneumatic system (103, 103') has a control unit (100, 100', 500) for controlling the compressed-air supply system (102, ..., 902) and the air spring system (121, ..., 900), and wherein in the method
- before the compressed-air supply system is vented, the compressed-air supply system (102, ..., 802) is actuated by the control unit (100, ..., 600) such that when an outlet valve (112, 112', 640, 809) is closed and the compressor (106, ..., 906) is turned off, compressed air (54, 54', 552, 852) from the air dryer (110, ..., 810) and/or the air distributor module (108, 808) is discharged into a first air spring (118, ..., 824) of the air spring system (121, ..., 821),
**characterized in that**
- the first air spring (118, ..., 824) is ascertained to be the air spring (118, ..., 824) which before compressed air (54, ..., 852) from the air dryer (110, ..., 810) and/or the air distributor module (108, ..., 808) is discharged has the greatest pressure difference to the pressure (54, ..., 852) in the air dryer (110, ..., 810) or the air distributor module (108, ..., 808),
- compressed air (54, ..., 852) from the air dryer (110, ..., 810) and/or the air distributor module (108, ..., 808) is first discharged into the air spring ascertained to be the first air spring (118, ..., 824), and
- temporally subsequent to compressed air (54, ..., 852) being discharged into the first air spring (118, ..., 824), compressed air (54, ..., 852) remaining in the air dryer (110, ..., 810) and/or the air distributor module (108, ..., 808) is discharged into a second air spring (118, ..., 824) of the air spring system (121, ..., 821) and/or an intermediate volume (838).

2. Method according to claim 1, **characterized in that** after the first and the second air spring (118, ..., 824) are supplied with compressed air (54, ..., 852), the remainder of the compressed air from the air dryer (110, ..., 810) and/or the air distributor module (108, ..., 808) is vented through the outlet (112, ..., 812) into the surrounding atmosphere (50, 50', 550).

3. Method according to at least one of the preceding claims,
**characterized in that** temporally after compressed air is discharged into the air springs (118, ..., 824) and before compressed air from the air dryer (110, ..., 810) and/or the air distributor module (108, ..., 808) is vented through the outlet (112, ..., 812) into the surrounding atmosphere (50, 50', 550), compressed air (54, ..., 852) from the air dryer (110, ..., 810) and/or the air distributor module (108, ..., 808) is discharged into the intermediate volume (838).

4. Method according to at least one of the preceding claims,
**characterized in that** the first and the second air spring (118, ..., 824) are supplied with compressed air from the air dryer (110, ..., 810) if a pressure sensor (116, ..., 816) first measures a level of the pressure (54, ..., 852) in the air distributor module (102, ..., 802) which is less than 12 bar, in particular less than 11 bar, preferably less than 10 bar, particularly preferably between 0 bar and 12 bar.

5. Method according to at least one of the preceding claims,
**characterized in that** the compressed-air supply system (102, ..., 802) is actuated by the control unit (100, ..., 600) such that the compressed air (54, ..., 852) is discharged into the first and the second air spring (118, ..., 824) in a specified compressed-air quantity (54, ..., 852) and/or for a specified time period (T4).

6. Method according to any of the preceding claims, **characterized in that**
- after the first and the second air spring (118, ..., 824) are filled, compressed air (54, ..., 852) from the air dryer (110, ..., 810) and/or the air distributor module (108, ..., 808) is subsequently discharged into the remaining air springs (118, ..., 824), wherein the air springs (118, ..., 824), the pressure (562) of which has the greatest difference to the pressure (54, ..., 852) in the air dryer (110, ..., 810) and/or in the air distributor module (108, 108') compared to the pressures of the other remaining air springs (118, ..., 824), are temporally successively filled with compressed air.

7. Method according to claim 3, **characterized in that** according to the sequence of air springs (118, ..., 824) ascertained on the basis of the greatest pressure difference to the pressure (54, ..., 852) in the air dryer (110, ..., 810) and/or in the air distributor module (108, ..., 808), the air springs (118, ..., 824), in the same sequence, are again temporally successively supplied with a specified compressed-air quantity (54, ..., 852) and/or are each supplied with compressed air from the air dryer (110, ..., 810) and/or the air distributor module (108, ..., 808) for a predefined time period (T4).

8. Method according to any of the preceding claims, **characterized in that** for each of the air springs (118, ..., 824), a compressed-air quantity is individually specified and the compressed-air supply system (102, ..., 802) is actuated by the control unit (100, ..., 1000) such that compressed air is discharged into the corresponding air spring (118, ..., 824) in the particular specified compressed-air quantity (54, ..., 852).

9. Method according to any of the preceding claims, **characterized in that** for each of the air springs (118, ..., 824), a time period (T4) is individually specified and the compressed-air supply system (102, ..., 802) is actuated by the control unit (100, ..., 600) such that compressed air is discharged into the corresponding air spring (118, ..., 824) for the particular specified time period (T4).

10. Method according to at least one of the preceding claims,
**characterized in that** the first air spring (118, ..., 122') is located on a different vehicle axle than the second air spring (118, ..., 122') and the first air spring (118, ..., 122') and the second air spring (118, ..., 122') are supplied with compressed air together with further air springs (118, ..., 122') of the same vehicle axle in each case.

11. Method according to claim 9, **characterized in that**
- if the pressure (564, 566) of the air springs (118, 122, 118', 122') of a front axle (534, 634) of the vehicle (101, ..., 803) is greater than the pressure (560, 562) of the air springs (120, 124, 120', 124') of a rear axle (536, 636) of the vehicle (101, 101')
- before venting, compressed air (54, ..., 852) from the air springs (118, ..., 122') of the front axle (534, 634) is discharged into the air springs (120, ..., 124') of the rear axle (536, 636).

12. Method according to at least one of claims 10 or 11, **characterized in that**
- if the pressure (560, 562) of the air springs (120, ..., 124') of a rear axle (536, 636) of the vehicle (101, 101', 503, 803) is greater than the pressure (564, 566) of the air springs (118, ..., 122') of a front axle (534, 634) of the vehicle (101, ..., 803)
- before venting, compressed air from the air springs (120, ..., 124') of the rear axle (536, 636) is discharged into the air springs (118, 122') of the front axle (534, 634).

13. Method according to at least one of the preceding claims,
**characterized in that** the compressed-air supply system (102, ..., 802') is actuated by the control unit (100, ..., 600) such that the outlet valve (112, 112', 640) is opened and closed again at predefined time intervals, such that the compressed-air supply system (102, ..., 802) is vented through the outlet (112, ..., 812) in a step-wise manner.

14. Method according to at least one of the preceding claims,
**characterized in that** the compressed-air supply system (102, ..., 802) is actuated by the control unit (100, ..., 600) such that while compressed air is vented through the outlet (112, ..., 812), the compressor (106, ..., 806) stores a portion of the compressed air such that the compressed-air supply system (102, ..., 802) is vented into the surrounding atmosphere (50, 50', 550) at a comparatively lower pressure difference.

15. Method according to at least one of the preceding claims,
**characterized in that** the compressed-air supply system (102, ..., 802) comprises an additional storage tank (838), and in addition to the air springs (118, ..., 824) and before the compressed-air supply system (102, ..., 802) is vented, the additional storage tank (838) is supplied with a specified compressed-air quantity (54, ..., 852) and/or is supplied with compressed air from the air dryer (110, ..., 810) and/or the air distributor module (108, ..., 808) for a predefined time period (T4).

## Revendications

1. Procédé permettant de faire fonctionner un système pneumatique (103, 103') présentant une installation d'alimentation en air comprimé (102, 102', 502, 600, 802) et une installation de ressort pneumatique (121, 121', 521, 621, 821) reliée pneumatiquement à l'installation d'alimentation en air comprimé (102, ..., 802), pour un véhicule (101, 101', 503, 803), dans lequel
- l'installation d'alimentation en air comprimé (102, ..., 802) présente une conduite principale pneumatique et un sécheur d'air (110, 110', 510, 632, 810, 910) dans la conduite principale pneumatique et la conduite principale pneumatique présente un raccord de compresseur (1) vers un compresseur (106, 106', 506, 628, 806, 906), et un raccord d'alimentation en air comprimé (2) vers un module de distribution d'air (108, 108', 508, 808, 920), dans lequel
- l'installation de ressort pneumatique présente un certain nombre de ressorts pneumatiques (118, 120, 122, 124, 118', 120', 122', 124', 518, 520, 522, 524, 610, 612, 614, 616, 818, 820, 822, 824, 918, 920, 922, 924) qui sont reliés pneumatiquement par l'intermédiaire d'une galerie de l'installation de ressort pneumatique (121, ..., 900), et
- le système pneumatique (103, 103') présente un appareil de commande (100, 100', 500) pour commander l'installation d'alimentation en air comprimé (102, ..., 902) et l'installation de ressort pneumatique (121, ..., 900), et dans lequel dans le procédé
- l'installation d'alimentation en air comprimé (102, ..., 802), avant une purge de l'installation d'alimentation en air comprimé, est commandée par l'appareil de commande (100, ..., 600) de telle sorte que l'air comprimé (54, 54', 552, 852) en provenance du sécheur d'air (110, ..., 810) et/ou du module de distribution d'air (108, 808) est évacué, lorsque la soupape d'échappement (112, 112', 640, 809) est fermée et lorsque le compresseur (106, ..., 906) est désactivé, dans un premier ressort pneumatique (118, ..., 824) de l'installation de ressort pneumatique (121, ..., 821),
**caractérisé en ce que**
- comme premier ressort pneumatique (118, ..., 824) est déterminé le ressort pneumatique (118, ..., 824) qui, avant l'évacuation de l'air comprimé (54, ..., 852) du sécheur d'air (110, ..., 810) et/ou du module de distribution d'air (108, ..., 808) présente la plus grande différence de pression par rapport à la pression (54, ..., 852) dans le sécheur d'air (110, ..., 810) ou le module de distribution d'air (108, ..., 808),
- l'air comprimé (54, ..., 852) est évacué du sécheur d'air (110, ..., 810) et/ou du module de distribution d'air (108, ..., 808) tout d'abord dans le ressort pneumatique déterminé comme premier ressort pneumatique (118, ..., 824), et
- à la suite de l'évacuation de l'air comprimé (54, ..., 852) dans le premier ressort pneumatique (118, ..., 824), de l'air comprimé (54, ..., 852) restant dans le sécheur d'air (110, ..., 810) et/ou le module de distribution d'air (108, ..., 808) est ensuite évacué dans un deuxième ressort pneumatique (118, ..., 824) de l'installation de ressort pneumatique (121, ..., 821) et/ou un volume intermédiaire (838).

2. Procédé selon la revendication 1, **caractérisé en ce qu'**après avoir alimenté les premier et deuxième ressorts pneumatiques (118, ..., 824,) en air comprimé (54, ..., 852), l'air comprimé restant est purgé du sécheur d'air (110, ..., 810) et/ou du module de distribution d'air (108, ..., 808) à travers l'échappement (112, ..., 812) dans l'atmosphère environnante (50, 50', 550).

3. Procédé selon au moins l'une des revendications précédentes,
**caractérisé en ce que,** à la suite de l'évacuation de l'air comprimé dans les ressorts pneumatiques (118, ..., 824) et avant une purge de l'air comprimé du sécheur d'air (110, ..., 810) et/ou du module de distribution d'air (108, ..., 808) à travers l'échappement (112, ..., 812) dans l'atmosphère environnante (50, 50', 550), de l'air comprimé (54, ..., 852) est évacué du sécheur d'air (110, ..., 810) et/ou du module de distribution d'air (108, ..., 808) dans le volume intermédiaire (838).

4. Procédé selon au moins l'une des revendications précédentes,
**caractérisé en ce que** le premier et le deuxième ressort pneumatique (118, ..., 824) sont alimentés en air comprimé en provenance du sécheur d'air (110, ..., 810), au cas où un capteur de pression (116, ..., 816), mesure d'abord une hauteur de la pression (54, ..., 852) dans le module de distribution d'air (102, ..., 802) qui est inférieure à 12 bar, en particulier inférieure à 11 bar, de préférence inférieure à 10 bar, de manière particulièrement préférée comprise entre 0 bar et 12 bar.

5. Procédé selon au moins l'une des revendications précédentes,
**caractérisé en ce que** l'installation d'alimentation en air comprimé (102, ..., 802) est commandée par l'appareil de commande (100, ..., 600) de telle sorte que l'air comprimé (54, ..., 852) en une quantité d'air comprimé (54, ..., 852) donnée au préalable et/ou pendant une durée (T4) donnée au préalable est évacué dans le premier et le deuxième ressort pneumatique (118, ..., 824).

6. Procédé selon l'une des revendications précédentes, **caractérisé en ce que**
- l'air comprimé (54, ..., 852) en provenance du sécheur d'air (110, ..., 810) et/ou du module de distribution d'air (108, ..., 808) après le remplissage des premier et deuxième ressorts pneumatiques (118, ..., 824) est ensuite évacué dans les autres ressorts pneumatiques (118, ..., 824), dans lequel, à la suite les uns des autres, celui des ressorts pneumatiques (118, ..., 824), dont la pression (562) présente, par comparaison avec les pressions des autres ressorts pneumatiques (118, ..., 824), la plus grande divergence par rapport à la pression (54, ..., 852) dans le sécheur d'air (110, ..., 810) et/ou dans le module de distribution d'air (108, 108'), est rempli d'air comprimé.

7. Procédé selon la revendication 3, **caractérisé en ce que,** conformément à l'ordre des ressorts pneumatiques (118, ..., 824) déterminé à l'aide de la plus grande différence de pression par rapport à la pression (54, ..., 852) dans le sécheur d'air (110, ..., 810) et/ou dans le module de distribution d'air (108, ..., 808), les ressorts pneumatiques (118, ..., 824) sont à nouveau alimentés dans le même ordre, à la suite les uns des autres, avec une quantité d'air comprimé (54, ..., 852) donnée au préalable et/ou respectivement pendant une durée (T4) prédéfinie avec de l'air comprimé en provenance du sécheur d'air (110, ..., 810) et/ou du module de distribution d'air (108, ..., 808).

8. Procédé selon l'une des revendications précédentes, **caractérisé en ce que** pour chacun des ressorts pneumatiques (118, ..., 824), une quantité d'air comprimé est donnée au préalable individuellement et l'installation d'alimentation en air comprimé (102, ..., 802) est commandée par l'appareil de commande (100, ..., 1000) de telle sorte que l'air comprimé est évacué dans la quantité d'air comprimé (54, ..., 852) respectivement donnée au préalable dans le ressort pneumatique correspondant des ressorts pneumatiques (118, ..., 824).

9. Procédé selon l'une des revendications précédentes, **caractérisé en ce que** pour chacun des ressorts pneumatiques (118, ..., 824), une durée (T4) est donnée au préalable individuellement et l'installation d'alimentation en air comprimé (102, ..., 802) est commandée par l'appareil de commande (100, ..., 600) de telle sorte que de l'air comprimé est évacué pendant la durée (T4) respectivement donnée au préalable dans le ressort pneumatique correspondant des ressorts pneumatiques (118, ..., 824).

10. Procédé selon au moins l'une des revendications précédentes,
**caractérisé en ce que** le premier ressort pneumatique (118, ..., 122') se trouve sur un autre essieu de véhicule que le deuxième ressort pneumatique (118, ..., 122') et le premier ressort pneumatique (118, ..., 122') et le deuxième ressort pneumatique (118, ..., 122') sont alimentés en air comprimé respectivement en même temps que d'autres ressorts pneumatiques (118, ..., 122') du même essieu de véhicule.

11. Procédé selon la revendication 9, **caractérisé en ce que**
- si la pression (564, 566) des ressorts pneumatiques (118, 122, 118', 122') d'un essieu avant (534, 634) du véhicule (101, ..., 803) est supérieure à la pression (560, 562) des ressorts pneumatiques (120, 124, 120', 124') d'un essieu arrière (536, 636) du véhicule (101, 101')
- avant la purge, de l'air comprimé (54, ..., 852) est évacué des ressorts pneumatiques (118, ..., 122') de l'essieu avant (534, 634) dans les ressorts pneumatiques (120, ..., 124') de l'essieu arrière (536, 636).

12. Procédé selon au moins l'une des revendications 10 ou 11,
**caractérisé en ce que,** - si la pression (560, 562) des ressorts pneumatiques (120, ..., 124') d'un essieu arrière (536, 636) du véhicule (101, 101', 503, 803) est supérieure à la pression (564, 566) des ressorts pneumatiques (118, ..., 122') d'un essieu avant (534, 634) du véhicule (101, ..., 803) - avant la purge de l'air comprimé est évacué des ressorts pneumatiques (120, ..., 124') de l'essieu arrière (536, 636) dans les ressorts pneumatiques (118, 122') de l'essieu avant (534, 634).

13. Procédé selon au moins l'une des revendications précédentes,
**caractérisé en ce que** l'installation d'alimentation en air comprimé (102, ..., 802') est commandée par l'appareil de commande (100, ..., 600) de telle sorte que la soupape d'échappement (112, 112', 640) est ouverte et refermée à des intervalles de temps prédéfinis, de sorte que l'installation d'alimentation en air comprimé (102, ..., 802) est purgée progressivement par l'échappement (112, ..., 812).

14. Procédé selon au moins l'une des revendications précédentes,
**caractérisé en ce que** l'installation d'alimentation en air comprimé (102, ..., 802) est commandée par l'appareil de commande (100, ..., 600) de telle sorte que le compresseur (106, ..., 806) pendant une purge de l'air comprimé par l'échappement (112, ..., 812) accumule une partie de l'air comprimé, de sorte que l'installation d'alimentation en air comprimé (102, ..., 802) est purgée dans l'atmosphère environnante (50, 50', 550) avec une différence de pression comparativement plus faible.

15. Procédé selon au moins l'une des revendications précédentes,
**caractérisé en ce que** l'installation d'alimentation en air comprimé (102, ..., 802) comprend un accumulateur supplémentaire (838), et en plus des ressorts pneumatiques (118, ..., 824) et avant la purge de l'installation d'alimentation en air comprimé (102, ..., 802), l'accumulateur supplémentaire (838) est alimenté en air comprimé en provenance du sécheur d'air (110, ..., 810) et/ou du module de distribution d'air (108, ..., 808) avec une quantité d'air comprimé (54, ..., 852) donnée au préalable et/ou pendant une durée (T4) prédéfinie.
